# EUROPÄISCHE PATENTSCHRIFT

(11) **EP 3 404 314 B1**
(45) Veröffentlichungstag und Bekanntmachung des Hinweises auf die Patenterteilung: **23.02.2022**
(21) Anmeldenummer: 18172807.2
(22) Anmeldetag: 17.05.2018
(51) Int. Cl.: F21S 45/47, F21S 41/147, F21S 41/19, B60Q 1/10, F21S 41/151, F21S 41/255, F21S 41/32, F21S 41/39, F21S 41/43, F21S 41/47, F21S 41/663, F21S 45/49

(54) **LICHTMODUL EINES KRAFTFAHRZEUGSCHEINWERFERS UND KRAFTFAHRZEUGSCHEINWERFER MIT EINEM SOLCHEN LICHTMODUL**
LIGHT MODULE OF A MOTOR VEHICLE HEADLIGHT AND HEADLIGHT WITH SUCH A LIGHT MODULE
MODULE D'ÉCLAIRAGE D'UN PHARE DE VÉHICULE AUTOMOBILE ET PHARE DE VÉHICULE AUTOMOBILE DOTÉ D'UN TEL MODULE D'ÉCLAIRAGE

(30) Priorität: 18.05.2017 DE 102017110877
(43) Veröffentlichungstag der Anmeldung: 21.11.2018
(73) Patentinhaber: Automotive Lighting Reutlingen GmbH, 72762 Reutlingen (DE)
(72) Erfinder: SCHÄFER, Bernhard, 73779 Deizisau (DE); TEYSSEYRE, Sylvain, 72764 Reutlingen (DE); BRAUN, Stephan, 70771 Echterdingen (DE); SINGER, Ephraim, 72762 Reutlingen (DE)
(74) Vertreter: DREISS Patentanwälte PartG mbB

(56) Entgegenhaltungen:
- EP-A1- 2 236 914
- EP-A1- 2 682 672
- EP-A2- 1 995 514
- WO-A1-2014/132186
- WO-A1-2017/057197

## Beschreibung

Die vorliegende Erfindung betrifft ein Lichtmodul eines Scheinwerfers eines Kraftfahrzeugs nach dem Oberbegriff des Anspruchs 1.

Ferner betrifft die Erfindung einen Kraftfahrzeugscheinwerfer, der ein solches Lichtmodul aufweist.

Lichtmodule und Kraftfahrzeugscheinwerfer der eingangs genannten Art sind in den verschiedensten Ausgestaltungen aus dem Stand der Technik bekannt. Ein Lichtmodul mit den Merkmalen des Anspruchs 1 ist aus der EP 2 682 672 A1 bekannt. Nach dem derzeitigen Stand der Technik sind die Lichtmodule jeweils zur Realisierung einer oder mehrerer vorgegebener Lichtfunktionen und zur Realisierung bestimmter Lichtstärken ausgelegt und speziell entworfen, wobei die Lichtfunktionen mit Elementen realisiert werden, die nicht ohne weitere Änderungen an dem Lichtmodul austauschbar sind. So gibt es bspw. Elemente zur Erzeugung einer herkömmlichen Fernlichtverteilung, Elemente zur Erzeugung einer in Segmente unterteilten Fernlichtverteilung (z.B. Streifen- oder Teilfernlicht), Elemente zur Erzeugung abgeblendeter Lichtverteilungen mit unterschiedlichen Verläufen einer Helldunkelgrenze gemäß den gesetzlichen Anforderungen in Europa, den USA, Japan, China etc., und Elemente zur Erzeugung einer abgeblendeten Lichtverteilung mit unterschiedlichen Lichtstärken. Jedes dieser Lichtmodule wird mit allen seinen Bauteilen für den speziellen Anwendungsfall ausgelegt und entworfen. Dadurch gestaltet sich die Entwicklung neuer Lichtmodule für einen neuen Anwendungsfall sehr aufwendig und teuer.

Es ist ein stetes Bestreben der Entwickler, Lichtmodule für Kraftfahrzeugscheinwerfer aus Platz- und Gewichtsgründen möglichst kleinbauend und somit hochintegriert (möglichst viele verschiedene Lichtfunktionen bei möglichst geringem Volumen des Lichtmoduls) auszugestalten. Dabei spielt das thermische Management, insbesondere das Ableiten von während des Betriebs der Elemente durch die LEDs erzeugten Abwärme an die Umgebung, um eine Überhitzung und in der Folge eine Funktionsbeeinträchtigung oder gar einen Defekt der LEDs zu vermeiden, eine immer wichtigere Rolle.

Ausgehend von dem beschriebenen Stand der Technik liegt der vorliegenden Erfindung deshalb die Aufgabe zugrunde, ein Lichtmodul der eingangs genannten Art dahingehend auszugestalten und weiterzubilden, dass die Abwärme der LEDs während ihres Betriebs möglichst effizient an die Umgebung des Lichtmoduls abgeleitet werden kann und ein Überhitzen der LEDs vermieden wird.

Diese Aufgabe wird mit den Merkmalen des Anspruchs 1 gelöst.

Durch das Einspannen der Leiterplatte zwischen den beiden Kühlkörpern ist diese und mit ihr die mindestens eine LED genau und zuverlässig in dem Lichtmodul, insbesondere bezüglich der Primäroptik des ersten Untermoduls, positioniert und gehalten. Das Einspannen erlaubt eine schnelle und unkomplizierte Montage des Lichtmoduls. Die Leiterplatte mit der mindestens einen LED des ersten Untermoduls ist vorzugsweise als eine Al-IMS (Insulated Metal Substrate) Leiterplatte ausgebildet.

Die Leiterplatte nimmt einen Großteil der Abwärme der mindestens einen LED auf und leitet sie ab. Ein Vorteil der vorliegenden Erfindung liegt darin, dass die Leiterplatte sowohl an ihrer Unterseite als auch an ihrer Oberseite eine Anbindungs- oder Kontaktfläche zu einem Kühlkörper aufweist, so dass der Wärmeübergang zwischen der Leiterplatte und dem zweiteiligen Kühlkörper des Lichtmoduls besonders effizient ist. Die Abwärme der mindestens einen LED wird großflächig an den Kühlkörper übertragen, der sie dann mittels Konvektion an die Umgebung abgeben kann. Zudem hat die Erfindung den Vorteil, dass die Leiterplatte nicht nur von oben, sondern auch von unten mit einem kühlenden Luftstrom beaufschlagt werden kann, bzw. dass bereits die Leiterplatte einen Teil der Abwärme mittels Konvektion über ihre Oberseite und ihre Unterseite an die Umgebung abgeben kann. Dies erlaubt eine besonders effiziente Ausgestaltung und Lenkung eines kühlenden Luftstroms in dem Lichtmodul um die Leiterplatte herum. Insgesamt ergibt sich somit eine besonders effiziente Kühlung der LEDs des ersten Untermoduls, so dass alleine die Abwärme der LEDs über Konvektion so weit abgeleitet werden kann, dass selbst bei einem langfristigen Betrieb der LEDs eine Funktionsbeeinträchtigung oder gar ein Defekt der LEDs durch Überhitzung nicht auftritt. Durch eine geeignete Ausgestaltung und Lenkung des Luftstroms in dem Lichtmodul kann sogar auf den Einsatz einer aktiven Kühlung, bspw. mittels eines Lüfters, verzichtet werden, was zu deutlichen Kostenvorteilen und einem deutlich leiseren Betrieb des Lichtmoduls führt.

Gemäß einer vorteilhaften Weiterbildung der Erfindung wird vorgeschlagen, dass die mindestens eine LED des zweiten Untermoduls auf einer Leiterplatte befestigt und elektrisch kontaktiert ist. Die Leiterplatte mit der mindestens einen LED des zweiten Untermoduls umfasst vorzugsweise einen FR4-Verbundwerkstoff mit AlN-Inlays unterhalb der mindestens einen LED. Diese Art von Leiterplatten weisen eine besonders gute Wärmeleitfähigkeit auf, was insbesondere für die leistungsstarken LEDs des zweiten Untermoduls, die relativ viel Abwärme erzeugen, wichtig ist.

Selbstverständlich wäre es denkbar, dass auch die Leiterplatte für die mindestens eine LED des zweiten Untermoduls bei montiertem Lichtmodul zwischen zwei Kühlkörpern eingespannt ist. Die beiden Leiterplatten der beiden Untermodule könnten bspw. nebeneinander zwischen den beiden Kühlkörpern in der gleichen horizontalen Ebene eingespannt sein. Insbesondere wäre es aber denkbar, dass der Kühlkörper des Lichtmoduls aus mehr als zwei Teil-Kühlkörpern besteht und die Leiterplatte mit den LEDs des ersten Untermoduls zwischen ersten zwei Kühlkörperteilen und die Leiterplatte mit den LEDs des zweiten Untermoduls zwischen anderen zwei Kühlkörperteilen eingespannt ist. Einer der Kühlkörperteile, zwischen denen die Leiterplatten eingespannt sind, kann identisch sein, so dass insgesamt drei übereinander angeordnete Kühlkörperteile ausreichen würden, um die beide Leiterplatten auf unterschiedlichen horizontalen Ebenen einzuspannen.

Es wird vorgeschlagen, dass die Kühlkörper der beiden Untermodule jeweils eine Vertiefung aufweisen, in der die übrigen Bauteile des jeweiligen Untermoduls angeordnet sind. In diese Vertiefungen können die einzelnen Bauteile der Untermodule eingesetzt und darin befestigt werden. Auf diese Weise kann ein modularer und hoch flexibler Aufbau des Lichtmoduls realisiert werden. Um eine andere Lichtfunktion zu erzielen, ist es in der Regel ausreichend, lediglich einzelne Bauteile des jeweiligen Untermoduls, dessen Lichtverteilung variiert werden soll, gegen entsprechende passende andere Bauteile auszutauschen. Eine komplette Neugestaltung des gesamten Lichtmoduls, wie dies beim Stand der Technik der Fall ist, wenn eines der Elemente eine andere Lichtverteilung erzeugen soll, ist bei dem erfindungsgemäßen Lichtmodul somit nicht erforderlich.

Wenn bspw. ein Lichtmodul zur Erzeugung eines Abblendlichts durch ein erstes Untermodul und eines herkömmlichen Fernlichts durch ein zweites Untermodul ausgelegt ist, kann es durch Austausch einiger Bauteile des zweiten Untermoduls zur Erzeugung eines Streifen- oder Teilfernlichts ausgelegt werden. Insbesondere muss lediglich die Lichtquelle und die Primäroptik des zweiten Untermoduls ausgetauscht werden. Unter Umständen könnte auch der Kühlkörper ausgetauscht werden, falls dies erforderlich sein sollte. Das restliche Lichtmodul, insbesondere das erste Untermodul zur Erzeugung des Abblendlichts, ein Halterahmen, ein Linsenhalter und die Projektionslinse können unverändert übernommen werden. In einem anderen Beispiel kann ausgehend von einem Lichtmodul zur Erzeugung eines Abblendlichts mit einer bestimmten Lichtstärke durch ein erstes Untermodul und eines herkömmlichen Fernlichts durch ein zweites Untermodul durch Austausch einiger Bauteile des ersten Untermoduls dieses zur Erzeugung eines Abblendlichts mit höherer Lichtstärke ausgelegt werden. Insbesondere muss lediglich die Lichtquelle des ersten Untermoduls ausgetauscht werden. Unter Umständen könnte auch die Primäroptik ausgetauscht werden, falls dies erforderlich sein sollte. Das restliche Lichtmodul, insbesondere der Kühlkörper des ersten Lichtmoduls, das zweite Untermodul zur Erzeugung des Fernlichts, ein Halterahmen, ein Linsenhalter und die Projektionslinse können unverändert übernommen werden. Das erfindungsgemäße Lichtmodul kann also nach der Art eines Baukastens aus verschiedenen Bauteilen modular zusammengesetzt werden, damit die Untermodule die gewünschten Lichtverteilungen mit den gewünschten Lichtstärken erzeugen.

Gemäß einer vorteilhaften Ausführungsform der Erfindung wird vorgeschlagen, dass die Leiterplatte mit der mindestens einen LED des zweiten Untermoduls in der Vertiefung eingesetzt ist, die in dem Kühlkörper des zweiten Untermoduls ausgebildet ist. Die Leiterplatte kann vollflächig auf einem Boden der Vertiefung aufliegen, so dass auch für diese Leiterplatte mit den LEDs des zweiten Untermoduls eine besonders große Anbingungs- bzw. Kontaktfläche zu dem Kühlkörper für eine effiziente Wärmeableitung realisiert ist.

In die Vertiefung des Kühlkörpers des zweiten Untermoduls sind vorteilhafterweise nacheinander eine Leiterplatte mit der mindestens einen darauf befestigten und elektrisch kontaktierten LED und dann die Primäroptik des zweiten Untermoduls eingesetzt. Die Primäroptik kann als ein Reflektor oder als ein massiver transparenter Kunststoffkörper ausgebildet sein, in den Licht eingekoppelt, totalreflektiert und gebündelt und umgelenkt wieder ausgekoppelt wird. Zur Realisierung eines herkömmlichen Fernlichts, umfasst die LED mindestens eine Hochleistungs-LED. In diesem Fall ist die Primäroptik vorzugsweise als ein Reflektor ausgebildet. Zur Realisierung eines Streifen- oder Teilfernlichts sind mehrere auf der Leiterplatte nebeneinander angeordnete LEDs vorgesehen, wobei jede der LEDs Licht zum Ausleuchten eines der Streifen des Streifen- oder Teilfernlichts aussendet. In diesem Sinne wird vorgeschlagen, dass die Primäroptik des zweiten Untermoduls als ein massiver transparenter Kunststoffkörper ausgebildet ist, der eine der mindestens einen LED des zweiten Untermoduls zugewandte Lichteintrittsfläche, über die von der mindestens einen LED ausgesandtes Licht eintritt, totalreflektierende Grenzflächen zum Umlenken des eingetretenen Lichts und eine bei montiertem Lichtmodul der Projektionslinse zugewandte Lichtaustrittsfläche aufweist, über die das umgelenkte Licht aus dem Kunststoffkörper austritt. Unter Umständen kann es erforderlich sein, die Neigung der Platine mit den darauf montierten LEDs je nach gewünschter Fernlichtverteilung (herkömmliches Fernlicht oder Streifen- bzw. Teilfernlicht) zu verändern. Dies kann entweder durch Verwendung eines zusätzlichen keilförmigen Einsatzteils, das auf den Kühlkörper unter die Platine eingesetzt wird, oder durch Verwendung eines anderen Kühlkörpers mit entsprechend angepasster Aufnahme für die Platine realisiert werden.

In die Vertiefung des Kühlkörpers des ersten Untermoduls sind vorteilhafterweise nacheinander die Primäroptik und dann eine Leiterplatte mit der mindestens einen darauf befestigten und elektrisch kontaktierten LED eingesetzt. Die eingesetzten Bauteile werden in der Vertiefung befestigt. Die mindestens eine LED und die Primäroptik des ersten Untermoduls sind zum Aussenden einer abgeblendeten Lichtverteilung mit einer horizontalen Helldunkelgrenze ausgebildet. Es können mehrere LEDs auf der Leiterplatte vorgesehen sein, die jeweils einen bestimmten Bereich (sog. Segment) der Reflexionsfläche des Reflektors beleuchten. Es ist bspw. denkbar, dass die Reflexionsfläche in drei streifenförmige Segmente unterteilt ist, wobei die beiden seitlichen Segmente eine breit gestreute Grundlichtverteilung mit einer symmetrischen horizontalen Helldunkelgrenze erzeugen und das mittlere Segment eine konzentrierte Spotlichtverteilung mit einer asymmetrischen Helldunkelgrenze erzeugt, wobei eine Überlagerung des von den verschiedenen Segmenten reflektierten Lichts die Abblendlichtverteilung erzeugt. Die Helldunkelgrenze kann durch eine entsprechende Form der Reflexionsfläche realisiert werden. Erfindungsgemäß ist im Strahlengang des von der Primäroptik gebündelten und umgelenkten Lichts ein Blendenelement angeordnet, das einen Teil des gebündelten und umgelenkten Lichts abschattet. Eine Kante des Blendenelements wird von der Projektionslinse als Helldunkelgrenze auf der Fahrbahn vor dem Kraftfahrzeug abgebildet.

Das Blendenelement ist derart in dem Lichtmodul angeordnet, dass zumindest die Kante des Blendenelements als Teil des ersten Untermoduls auf oder oberhalb der horizontalen Trennebene angeordnet ist.

Um Abblendlicht mit unterschiedlichen Lichtstärken aussenden zu können, werden auf verschiedenen Platinen LEDs mit unterschiedlichen Lichtstärken montiert. Je nach dem, welche der Platinen mit LEDs in die Vertiefung des Kühlkörpers des ersten Untermoduls eingesetzt werden, sendet das Untermodul Abblendlicht mit einer bestimmten Lichtstärke aus. Unter Umständen kann es dann erforderlich sein, auch die Primäroptik auszutauschen, um eine an die jeweils verwendeten LEDs angepasst Reflexionsfläche zur Verfügung zu stellen.

Gemäß einer vorteilhaften Ausführungsform der Erfindung wird vorgeschlagen, dass ein sich bei montiertem Lichtmodul in einer horizontalen Ebene erstreckendes plattenartiges verspiegeltes Blendenelement mit einer Vorderkante, welche die Projektionslinse als horizontale Helldunkelgrenze der abgeblendeten Lichtverteilung auf der Fahrbahn vor dem Kraftfahrzeug abbildet, als letztes Bauteil in die Vertiefung des Kühlkörpers des zweiten Untermoduls eingesetzt ist, wobei die Vorderkante des Blendenelements bei montiertem Lichtmodul in bzw. oberhalb der horizontalen Trennebene des Lichtmoduls angeordnet ist. Somit ist selbst in dem Fall, dass ein Blendenelement, das dem ersten Untermodul zugeordnet ist, in die Vertiefung des Kühlkörpers des zweiten Untermoduls eingesetzt ist, eine strenge Unterteilung der Untermodule ober- und unterhalb der horizontalen Trennebene möglich. Das sich in einer horizontalen Ebene erstreckende plattenartige Blendenelement ist bei montiertem Lichtmodul vorzugsweise vollständig in oder oberhalb der horizontalen Trennebene angeordnet.

Falls die Primäroptik des zweiten Untermoduls als ein massiver transparenter Kunststoffkörper ausgebildet ist, ist vorzugsweise das Blendenelement vor dem Einsetzen des Kunststoffkörpers in die Vertiefung des Kühlkörpers des zweiten Untermoduls an dem Kunststoffkörper mittels Heißprägen befestigt und anschließend zusammen mit diesem in die Vertiefung des Kühlkörpers des zweiten Untermoduls eingesetzt. Auf diese Weise kann auf eine separate Befestigung des Blendenelements an einem der Kühlkörper verzichtet werden.

Gemäß einer anderen vorteilhaften Weiterbildung der vorliegenden Erfindung wird vorgeschlagen, dass die Kühlkörper der beiden Untermodule jeweils eine Auflagefläche aufweisen, mit der sie bei montiertem Lichtmodul aneinander anliegen und zwischen denen bei montiertem Lichtmodul die Leiterplatte mit der mindestens einen LED des ersten Untermoduls eingespannt ist. Die Auflageflächen der Kühlkörper erstrecken sich vorteilhafterweise über einen Großteil einer entgegen der Lichtaustrittsrichtung gerichteten Rückseite sowie an den Seiten der Kühlkörper der beiden Untermodule. An der Vorderseite der Kühlkörper ist die darin ausgebildete Vertiefung in Lichtaustrittsrichtung geöffnet, um einen Austritt des gebündelten Lichts aus der in der Vertiefung angeordneten Primäroptik zu erlauben. Die Auflageflächen der Kühlkörper haben also eine U-Form, wobei die Öffnung des U in Lichtaustrittsrichtung zeigt. Über die Auflageflächen kommt es zu einem Wärmeaustausch zwischen den Kühlkörpern und der eingespannten Leiterplatte, so dass stets eine optimale Wärmeverteilung und -abgabe ermöglicht ist.

Vorzugsweise sind die Kühlkörper bei montiertem Lichtmodul aneinander befestigt, insbesondere mittels Schrauben. Zumindest einige der in den Vertiefungen der Kühlkörper angeordneten Bauteile der Untermodule werden durch das Befestigen der Kühlkörper aneinander in die Vertiefungen gedrückt und darin gehalten bzw. befestigt. Außerdem kann durch die Befestigung ein optimaler Wärmeaustausch zwischen den Kühlkörpern ermöglicht werden.

Zur weiteren Verbesserung der thermischen Eigenschaften des Lichtmoduls wird vorgeschlagen, dass zumindest der Kühlkörper des zweiten Untermoduls auf einem in Lichtaustrittsrichtung des Lichtmoduls gerichteten vorderen Abschnitt mindestens eine Ventilationsöffnung aufweist, durch die ein von unten nach oben gerichteter Luftstrom an die zwischen den Kühlkörpern eingespannte Leiterplatte mit der mindestens einen LED des ersten Untermoduls gelangen kann. Vorzugsweise hat der vordere Abschnitt des Kühlkörpers des zweiten Untermoduls eine flächige Erstreckung in einer im Wesentlichen horizontalen Ebene. In diesem Abschnitt können mehrere längliche Öffnungen ausgebildet sein, deren Längsachsen vorzugsweise parallel zueinander und im Wesentlichen in Lichtaustrittsrichtung verlaufen. Durch diese Ventilationsöffnungen kann sich während des Betriebs des Lichtmoduls durch Konvektion ein von unten nach oben gerichteter Luftstrom ausbilden, der von unten auf die Leiterplatte mit der mindestens einen LED des ersten Untermoduls trifft und für eine Kühlung der Leiterplatte sorgt. Selbstverständlich sorgen die Ventilationsöffnungen auch für eine effizientere Kühlung der anderen Leiterplatte mit der mindestens einen LED des zweiten Untermoduls.

Die thermischen Eigenschaften des Lichtmoduls können des Weiteren dadurch verbessert werden, dass, zumindest der Kühlkörper des ersten Untermoduls zumindest auf einer bei montiertem Lichtmodul nach oben gerichteten Oberseite Kühlrippen aufweist, die eine Flächenerstreckung in einer Vertikalebene haben, die parallel zu einer Lichtaustrittsrichtung des Lichtmoduls verläuft, wobei in den Kühlrippen jeweils ein Schlitz ausgebildet ist und die Schlitze der Kühlrippen derart zueinander ausgerichtet sind, dass sich quer zu der Flächenerstreckung der Kühlrippen durch die Schlitze der Kühlrippen hindurch ein Ventilationsspalt ergibt. Dieser Ventilationsspalt sorgt dafür, dass der durch Konvektion hervorgerufene Luftstrom in und um das Kühlmodul herum nicht nur parallel zur Flächenerstreckung der Kühlrippen, sondern auch quer dazu verlaufen kann. Dadurch ergibt sich eine effizientere Kühlung des Lichtmoduls. Es kommt zu Verwirbelungen im Bereich des Kühlkörpers des ersten Untermoduls, die einen besonders guten Wärmeabtransport fördern. Es kommt zu einer Reduzierung der thermischen Grenzschicht zwischen dem Kühlkörper und dem Luftstrom.

Insgesamt wird also im Sinne der vorliegenden Erfindung eine Kombination mehrerer Maßnahmen zur Verbesserung der thermischen Eigenschaften des Lichtmoduls vorgeschlagen. Diese erlauben es entweder einzeln oder gemeinsam, eine besonders effiziente Kühlung des Lichtmoduls zu erzielen, so dass das Lichtmodul hochintegriert und kompakt ausgebildet werden kann und trotzdem mittels Konvektion (ohne aktive Kühlung, bspw. mittels eine Lüfters, eines Heatpipes oder eines Peltierelements) eine ausreichende Kühlung des Lichtmoduls erzielt werden kann, um während des Betriebs eine zu starke Erwärmung der LEDs wirksam zu verhindern.

Vorteilhafterweise ist zumindest die Leiterplatte mit der mindestens einen LED des ersten Untermoduls als eine Al-IMS (Aluminium Insulated Metal Substrate) Leiterplatte ausgebildet. Ferner wird vorgeschlagen, dass zumindest die Leiterplatte mit der mindestens einen LED des zweiten Untermoduls einen FR4-Verbundwerkstoff mit AlN-Inlays unterhalb der mindestens einen LED umfasst. Eine solche Leiterplatte wird bspw. von der Firma Rayben^{®} vertrieben. Selbstverständlich wäre es auch denkbar, dass beide Leiterplatten mit den LEDs des ersten und des zweiten Untermoduls als eine Al-IMS Leiterplatte ausgebildet sind oder einen FR4-Verbundwerkstoff mit AlN-Inlays unterhalb der LEDs umfassen. Diese Leiterplatten erlauben einen besonders guten Wärmeübergang zwischen der mindestens einen LED und den Kühlkörpern. Für eine Verbesserung der Wärmeableitung kann ein Wärmeleitklebstoff oder eine Wärmeleitpaste zwischen den LEDs und der Leiterplatte eingesetzt werden.

Vorteilhafterweise weisen die Kühlkörper der beiden Untermodule jeweils an einer entgegen der Lichtaustrittsrichtung gerichteten Rückseite eine Öffnung auf, über die Steckerelemente von außerhalb des Lichtmoduls zugänglich sind, die auf Leiterplatten mit der mindestens einen darauf befestigten und elektrisch kontaktierten LED der jeweiligen Untermodule angeordnet und elektrisch kontaktiert sind. Über diese Steckerelemente können die LEDs des Lichtmoduls somit elektrisch kontaktiert und mit Energie und/oder Ansteuersignalen versorgt werden.

Vorzugsweise sind die beiden Untermodule mit einer in Lichtaustrittsrichtung gerichteten Vorderseite der Kühlkörper an einem Halterahmen befestigt, über den das Lichtmodul in einem Gehäuse des Scheinwerfers befestigt ist. Ferner wird vorgeschlagen, dass auf einer den Untermodulen gegenüberliegenden Vorderseite des Halterahmens ein Linsenhalter mit der daran befestigten Projektionslinse befestigt ist. Der Linsenhalter ist vorzugsweise als ein weitgehend geschlossener Tubus, insbesondere aus einem Kunststoffmaterial, ausgebildet sein. Durch die Ausgestaltung des Linsenhalters als Tubus kann das Austreten von unerwünschtem Streulicht aus dem Lichtmodul verhindert werden. Somit kann das komplette Lichtmodul als eine kompakte Einheit ausgebildet werden. Besonders bevorzugt ist es, wenn der Halterahmen und der Linsenhalter für die Projektionslinse aus einem Arnite^{®}-Material bestehen, das besonders gute Wärme leitenden Eigenschaften aufweist und die thermischen Eigenschaften des Lichtmoduls zusätzlich verbessern kann.

Des Weiteren wird vorgeschlagen, dass der Halterahmen seitlich Lagerstellen aufweist, über welche das Lichtmodul um eine horizontale Drehachse verschwenkbar in dem Gehäuse des Scheinwerfers gelagert ist. Dadurch kann eine Leuchtweitenregulierung realisiert werden. Ferner kann dadurch die Lichtverteilung in bestimmten Verkehrs- und/oder Fahrsituationen angehoben werden, um die Reichweite zu erhöhen.

Schließlich wird zur Lösung der Aufgabe der vorliegenden Erfindung auch ein Kraftfahrzeugscheinwerfer der eingangs genannten Art vorgeschlagen, wobei im Inneren des Gehäuses des Scheinwerfers mindestens ein erfindungsgemäßes Lichtmodul der oben beschriebenen Art angeordnet ist. Selbstverständlich wäre es denkbar, in dem Scheinwerfergehäuse mehrere erfindungsgemäße Lichtmodule anzuordnen. Dabei kann jedes der Untermodule der Lichtmodule eine unterschiedliche Lichtverteilung erzeugen. Es wäre aber auch denkbar, dass eine bestimmte Lichtverteilung des Scheinwerfers durch mehrere Untermodule und durch Überlagerung der von diesen Lichtmodulen erzeugten Lichtverteilungen realisiert wird. So wäre es bspw. denkbar, dass eines der Untermodule eine breit gestreute Grundlichtverteilung mit einer horizontalen, streng symmetrischen Helldunkelgrenze erzeugt, während ein anderes der Untermodule eine konzentrierte Spotlichtverteilung mit einer asymmetrischen Helldunkelgrenze erzeugt, wobei eine Überlagerung des Grundlichts und des Spotlichts eine Abblendlichtverteilung gemäß den gesetzlichen Vorgaben liefert.

Weitere Merkmale und Vorteile der vorliegenden Erfindung werden nachfolgend unter Bezugnahme auf die Figuren näher erläutert. Die vorliegende Erfindung kann die nachfolgend anhand eines bevorzugten Ausführungsbeispiels beschrieben und in den Figuren gezeigten Merkmale auch separat voneinander oder in einer anderen Kombination als hier beschrieben aufweisen. In den Figuren zeigen:
- Figur 1: ein aus dem Stand der Technik bekanntes Lichtmodul in einer perspektivischen Ansicht;
- Figur 2: einen rückwärtigen Teil des Lichtmoduls aus Figur 1;
- Figur 3: eine Seitenansicht des Lichtmoduls aus Figur 1;
- Figur 4: ein erfindungsgemäßes Lichtmodul gemäß einer bevorzugten Ausführungsform in einer Schnittansicht;
- Figur 5: ein erfindungsgemäßes Lichtmodul gemäß Figur 4 in einer perspektivischen Ansicht;
- Figur 6: ein erfindungsgemäßes Lichtmodul gemäß einer weiteren bevorzugten Ausführungsform in einer perspektivischen Ansicht;
- Figur 7: das Lichtmodul aus Figur 5 in einer Explosionsansicht;
- Figur 8: das Lichtmodul aus Figur 6 in einer

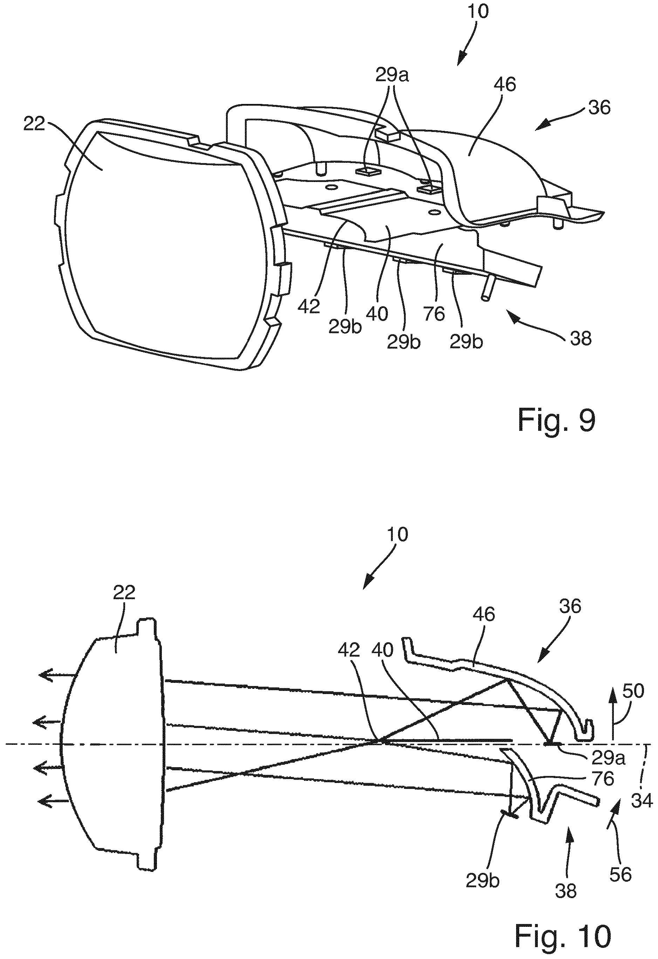

- Figur 9: Explosionsansicht; eine perspektivische Ansicht des Lichtmoduls aus Figur 8;
- Figur 10: eine schematische Ansicht des Lichtmoduls aus Figur 9 in einem Vertikalschnitt;
- Figur 11: eine perspektivische Ansicht des Lichtmoduls aus Figur 7;
- Figur 12: eine schematische Ansicht des Lichtmoduls aus Figur 11 in einem Vertikalschnitt;
- Figur 13: eine erste Leiterplatte mit den LEDs des ersten Untermoduls des Lichtmoduls aus Figur 9;
- Figur 14: eine zweite Leiterplatte mit den LEDs des zweiten Untermoduls des Lichtmoduls aus Figur 9;
- Figur 15: eine erste Leiterplatte mit den LEDs des ersten Untermoduls des Lichtmoduls aus Figur 11;
- Figur 16: eine zweite Leiterplatte mit den LEDs des zweiten Untermoduls des Lichtmoduls aus Figur 11;
- Figur 17: einen Kühlkörper eines zweiten Untermoduls eines erfindungsgemäßen Lichtmoduls;
- Figur 18: eine schematische Darstellung der Wärmeleitung in einer Leiterplatte aus den Figuren 14 oder 16;
- Figur 19: einen Ausschnitt aus der Leiterplatte aus Figur 18;
- Figur 20: eine schematische Ansicht eines Wärmeaustauschs in dem Lichtmodul während des Betriebs;
- Figur 21: ein Bespiel für eine bevorzugte Richtung eines durch Konvektion hervorgerufenen Luftstroms in dem Lichtmodul;
- Figur 22: nach Art eines Kerzenmodells schematisch eingezeichneter Luftstrom in dem Lichtmodul;
- Figur 23: Ventilationsöffnungen in dem Kühlkörper des zweiten Untermoduls; und
- Figur 24: einen erfindungsgemäßen Kraftfahrzeugscheinwerfer mit einem Lichtmodul.

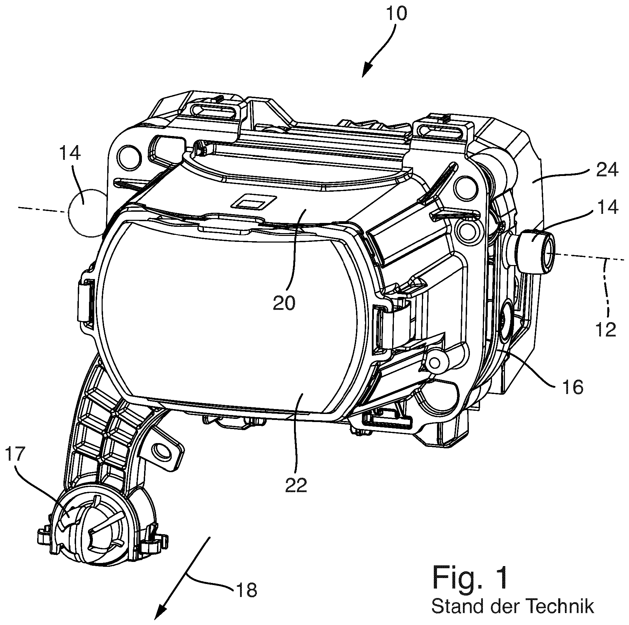

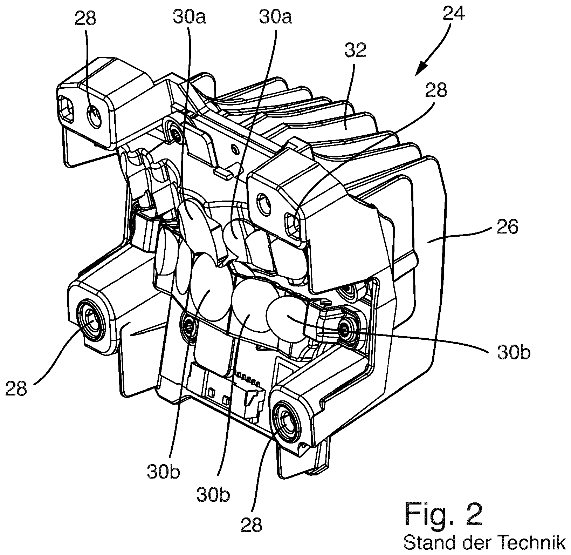

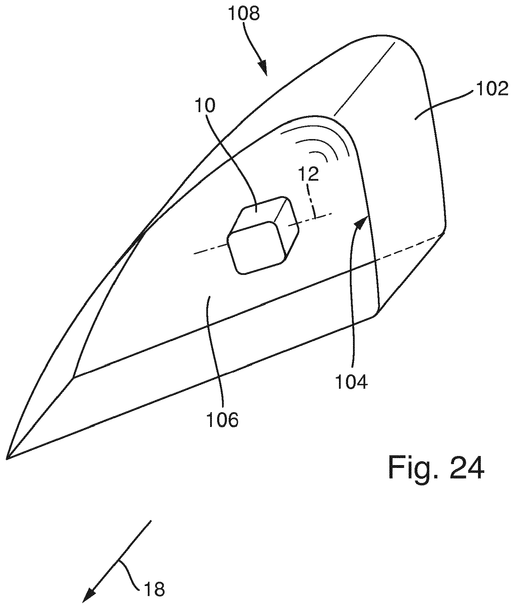

In Figur 1 ist ein aus dem Stand der Technik bekanntes Lichtmodul in seiner Gesamtheit mit dem Bezugszeichen 10 bezeichnet. Das Lichtmodul 10 wird in ein Gehäuse 102 (vgl. Figur 24) eines Kraftfahrzeugscheinwerfers 108 um eine horizontale Achse 12 schwenkbar eingebaut. Die Schwenkachse 12 wird durch Lagerstellen 14 gebildet, die seitlich an einem Halterahmen 16 des Lichtmoduls 10 angeordnet und in entsprechenden Lagerstellen in dem Scheinwerfergehäuse 102 gelagert sind. Der Halterahmen 16 besteht vorzugsweise aus Kunststoff. Seitlich an dem Halterahmen 16 ist auch ein Hebel 17 angeordnet, an dem ein Betätigungselement (nicht dargestellt) angelenkt ist, welches die Schwenkbewegung des Lichtmoduls 10 um die horizontale Achse 12 bewirkt. An der Vorderseite in einer Lichtaustrittsrichtung 18 ist an dem Halterahmen 16 eine Linsenhalterung 20 befestigt, welche eine Projektionslinse 22 des Lichtmoduls 10 hält. An der Rückseite des Halterahmens 16 ist eine Kühlkörpereinheit 24 des Lichtmoduls 10 befestigt, die im Detail in Figur 2 gezeigt ist.

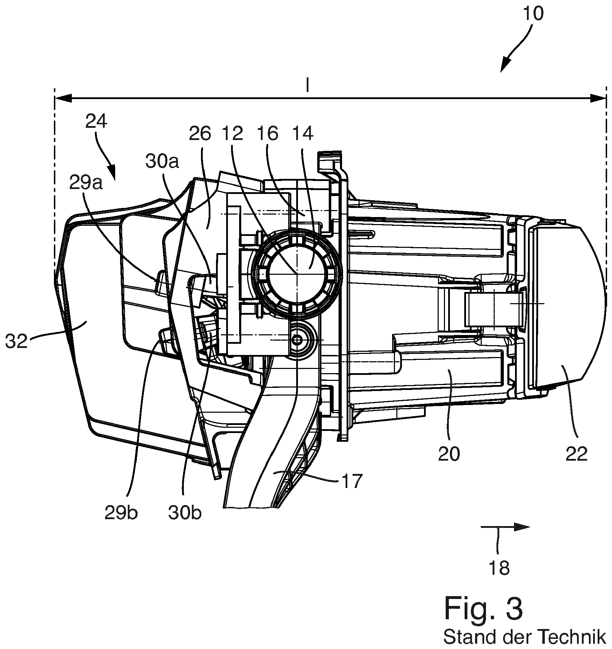

Die Kühlkörpereinheit 24 umfasst zunächst den eigentlichen Kühlkörper 26, der aus einem gut Wärme leitfähigen Material, insbesondere Metall, vorzugsweise Aluminium, gefertigt ist. Dieser ist im Stand der Technik aus einem Stück gefertigt. Der Kühlkörper 26 ist an mehreren Befestigungsstellen 28, bspw. mittels Schrauben, an dem Halterahmen 16 befestigt. Im Inneren des Kühlkörpers 26 sind matrixartig über- und/oder nebeneinander mehrere LEDs zum Emittieren von Licht und in Hauptabstrahlrichtung vor den LEDs sind Primäroptiken umfassend mehrere Vorsatzoptiken 30 zum Bündeln des von den LEDs ausgesandten Lichts und zum Umlenken des Lichts in Richtung der Projektionslinse 22 angeordnet. In dem hier gezeigten Beispiel sind zwei Reihen von LEDs und Vorsatzoptiken 30a, 30b vorgesehen. In Figur 2 sind die LEDs hinter (unter) den Vorsatzoptiken 30a, 30b angeordnet und deshalb nicht zu sehen. In Figur 3 sind die LEDs angedeutet und mit den Bezugszeichen 29a, 29b bezeichnet. Der Kühlkörper 26 dient dazu, von den LEDs während ihres Betriebs abgegebene Wärme an die Umgebung abzugeben. Er umfasst an seiner Rückseite Kühlrippen 32, um die Fläche zur Wärmeabgabe an die Umgebung zu vergrößern und die Wärmeabgabe effizienter zu gestalten.

Das Lichtmodul 10 umfasst ein erstes (oberes) Element zur Erzeugung einer abgeblendeten Lichtverteilung mit einer horizontalen Helldunkelgrenze, dem die in Figur 2 gezeigte obere Reihe an LEDs 29a und Vorsatzoptiken 30a zugeordnet ist. Zur Realisierung der Helldunkelgrenze kann im Strahlengang des von der oberen Reihe an LEDs 29a ausgesandten und von der oberen Reihe der Vorsatzoptiken 30a gebündelten Lichts ein Blendenelement (nicht gezeigt) angeordnet sein, das zumindest einen Teil des ausgesandten Lichts abschattet. Eine Kante des Blendenelements wird von der Projektionslinse 22 als Helldunkelgrenze auf die Fahrbahn vor dem Kraftfahrzeug abgebildet. Ferner umfasst das Lichtmodul 10 ein zweites (unteres) Element zur Ausleuchtung eines Fernbereichs oberhalb der Helldunkelgrenze und zur Realisierung einer Fernlichtverteilung. Dem zweiten Element ist die untere Reihe an LEDs 29b und Vorsatzoptiken 30b zugeordnet. Das von den beiden Elementen ausgesandte Licht wird von der Projektionslinse 22 als resultierende Lichtverteilung des Lichtmoduls 10 auf der Fahrbahn vor dem Kraftfahrzeug abgebildet.

Im Stand der Technik ist das gesamte Lichtmodul 10 mit seinen Elementen als eine integrale Einheit ausgebildet. Insbesondere weist es lediglich einen einteilig ausgebildeten Kühlkörper 26 auf. Wenn in einem der Elemente eine andere Lichtverteilung erzeugt werden soll, bspw. durch das erste Element eine abgeblendete Lichtverteilung mit einer größeren Lichtstärke, muss das gesamte Lichtmodul 10 neu ausgelegt und entwickelt werden, da dies leistungsfähigere oder mehr LEDs 29a des ersten Elements aufgrund der größeren Abwärme in der Regel auch eine Umgestaltung des Kühlkörpers 26 erforderlich macht. Zudem ist die Anordnung und Kontaktierung der LEDs 29a eine andere, was die Verwendung einer anderen Platine, auf der die LEDs 29a befestigt und elektrisch kontaktiert sind, erforderlich macht. Das bekannte Lichtmodul 10 ist insbesondere nicht modular aufgebaut, so dass nicht einfach einzelne Bauteile der einzelnen Elemente durch andere Bauteile ausgewechselt werden können, um eine andere Lichtverteilung zu erzeugen. Zudem weist das bekannte Lichtmodul 10 eine Länge l auf. Es wird eine geringere Länge l des Lichtmoduls 10 angestrebt, damit der Bauraum des Lichtmoduls 10 im Scheinwerfergehäuse 102 und damit der von dem Scheinwerfer 108 in der Fahrzeugkarosserie erforderliche Bauraum reduziert werden kann.

Ferner sind die thermischen Eigenschaften des bekannten Lichtmoduls 10 nicht optimal. Aufgrund der kompakten und hochintegrierten Bauweise des Lichtmoduls 10 und den Verzicht auf eine aktive Kühlung bspw. mittels eines Lüfters oder Gebläses, wäre eine effizientere Kühlung des Lichtmoduls 10, insbesondere der LEDs 29a, 29b wünschenswert um eine Beeinträchtigung der Funktionsfähigkeit oder gar einen Defekt der LEDs 29a, 29b zu vermeiden.

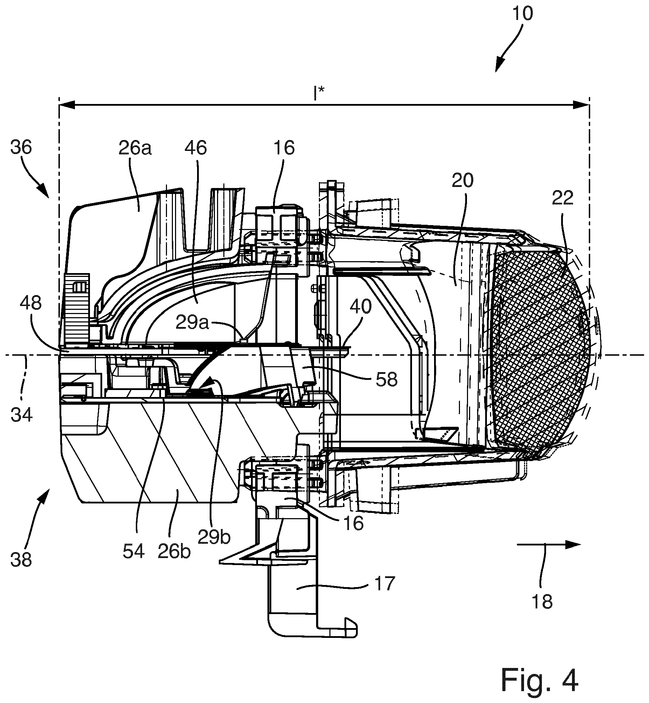

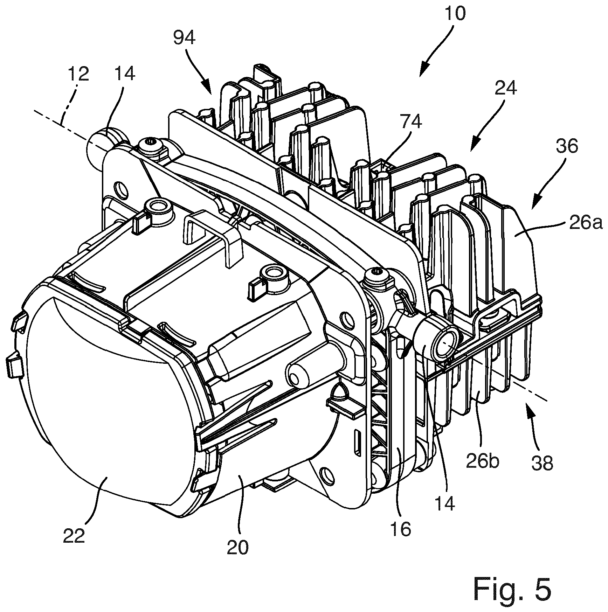

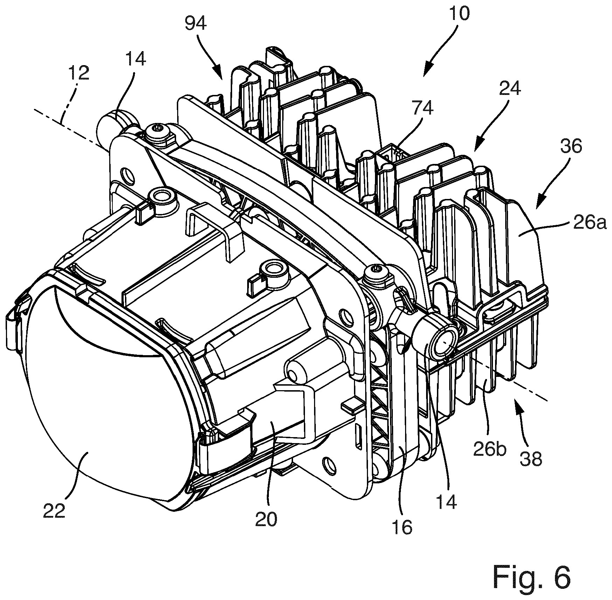

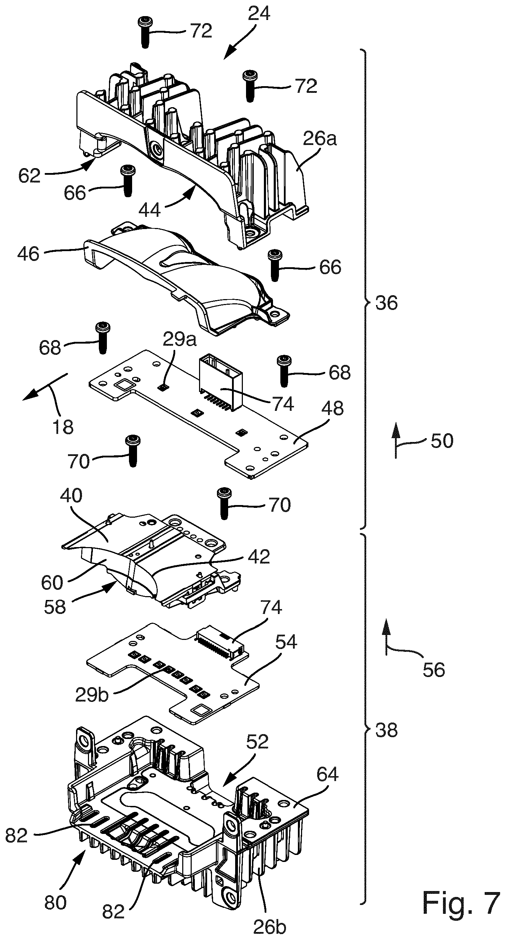

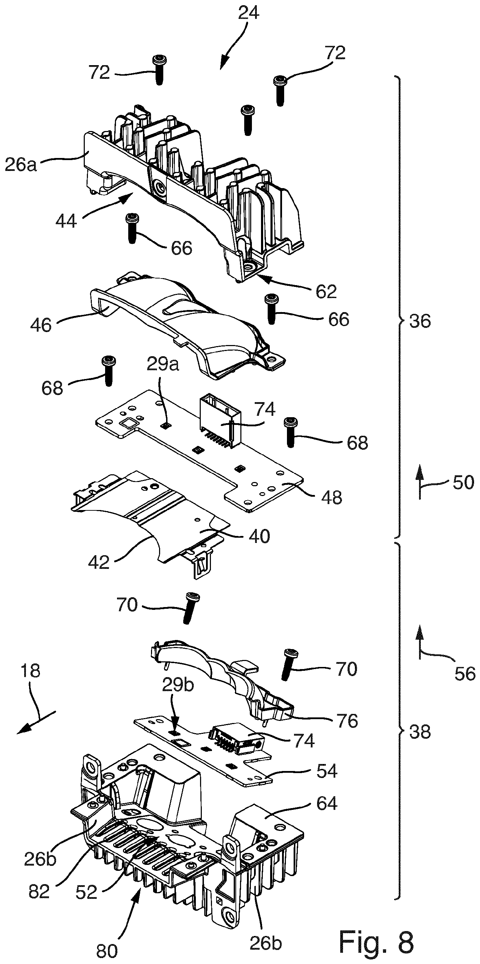

Gemäß der vorliegenden Erfindung wird ein modular aufgebautes Lichtmodul 10 vorgeschlagen. In diesem Sinne wird vorgeschlagen, dass das Lichtmodul 10 einschließlich des Kühlkörpers 26 durch eine horizontale Trennebene 34 in die beiden Untermodule unterteilt ist, wobei sämtliche Bauteile des ersten Untermoduls oberhalb der horizontalen Ebene 34 und sämtliche Bauteile des zweiten Untermoduls unterhalb der horizontalen Ebene 34 angeordnet sind. Da die Projektionslinse 22 funktional weder dem einen noch dem anderen Untermodul zugeordnet werden kann, ist sie als einziges nicht durch die Trennebene 34 unterteilt. In den Figuren 4 bis 6 sind verschiedene Ausführungsformen eines erfindungsgemäßen Lichtmoduls 10 gezeigt. Figur 4 zeigt eine erste Ausführungsform in einer Seitenansicht, teilweise im Schnitt. Das Lichtmodul 10 aus Figur 4 ist in Figur 5 in einer perspektivischen Ansicht gezeigt. In Figur 7 ist diese Ausführungsform in einer Explosionsansicht gezeigt. Figur 6 zeigt eine andere Ausführungsform, die in Figur 8 in einer Explosionsansicht gezeigt ist. Die Untermodule sind mit den Bezugszeichen 36 und 38 bezeichnet. Dem oberen Untermodul 36 ist ein oberer Kühlkörper 26a und dem unteren Untermodul 38 ein unterer Kühlkörper 26b zugeordnet.

Bei dem Beispiel aus den Figuren 4, 5 und 7 erzeugt das obere Untermodul 36 eine herkömmliche Abblendlichtverteilung mit einer horizontalen Helldunkelgrenze oder einen Teil davon (z.B. Grundlicht oder Spotlicht). Die Helldunkelgrenze dann dabei je nach Ausgestaltung des Blendenelements 40 (vgl. Figur 7) bzw. von dessen Vorderkante 42 einen asymmetrischen Verlauf aufweisen. Dies ist in dem hier gezeigten Beispiel der Fall. Die resultierende Helldunkelgrenze hat eine größere Reichweite auf der eigenen Verkehrsseite und dient bspw. für eine herkömmliche Abblendlichtverteilung oder ein Spotlicht einer Abblendlichtverteilung. Alternativ kann die Helldunkelgrenze bei einer anderen Ausgestaltung der Vorderkante 42 des Blendenelements 40 einen symmetrischen (gerade horizontale Helldunkelgrenze) Verlauf aufweisen. Eine solche Helldunkelgrenze wird bspw. für ein breit streuendes Grundlicht einer Abblendlichtverteilung verwendet. Das Blendenelement 40 ist vorzugsweise verspiegelt, so dass das abgeschattete Licht zumindest zum Teil reflektiert wird.

Der obere Kühlkörper 26a des oberen Untermoduls 36 des erfindungsgemäßen Lichtmoduls 10 umfasst eine Vertiefung 44, in welche die übrigen Bauteile des Untermoduls 36 eingesetzt sind. Diese Bauteile umfassen bspw. eine Primäroptik in Form eines Reflektors 46 sowie eine Platine 48 mit den darauf angeordneten und elektrisch kontaktierten LEDs 29a. Die LEDs 29a strahlen bei in dem Lichtmodul 10 verbauter Platine 48 Licht in eine nach oben in Richtung des Reflektors 46 gerichtete Hauptabstrahlrichtung 50 ab.

Der Reflektor 46 bündelt das Licht der LEDs 29a und lenkt es in die Lichtaustrittsrichtung 18 in Richtung der Projektionslinse 22 um. Auch das dem oberen Untermodul 36 zugeordnete Blendenelement 40 bzw. dessen Vorderkante 42 ist im montierten Zustand des Lichtmoduls 10 entweder oberhalb, zumindest aber auf der horizontalen Trennebene 34 angeordnet.

Bei dem Beispiel aus den Figuren 4, 5 und 7 erzeugt das untere Untermodul 38 eine Fernlichtverteilung in Form eine Matrix- oder Streifen-Fernlichts. Dabei wird der ausgeleuchtete Bereich oberhalb der Helldunkelgrenze in mehrere vertikale streifenförmige Segmente unterteilt, wobei jeder der Streifen durch das Licht von mindestens einer der LEDs 29b ausgeleuchtet wird. Durch gezieltes Ansteuern der LEDs 29b können einzelne Streifen gedimmt oder ausgeschaltet werden, bspw. um eine Blendung von anderen Verkehrsteilnehmern (z.B. vorausfahrende oder entgegenkommende Fahrzeuglenker) zu verhindern, die sich in dem Bereich aufhalten, der von der gedimmten oder ausgeschalteten LED 29b beleuchtet wird. Die anderen Verkehrsteilnehmer werden durch geeignete Sensorik (z.B. eine Frontkamera) und Auswertung der Sensorsignale im Kraftfahrzeug detektiert und die einzelnen LEDs 29b entsprechend angesteuert.

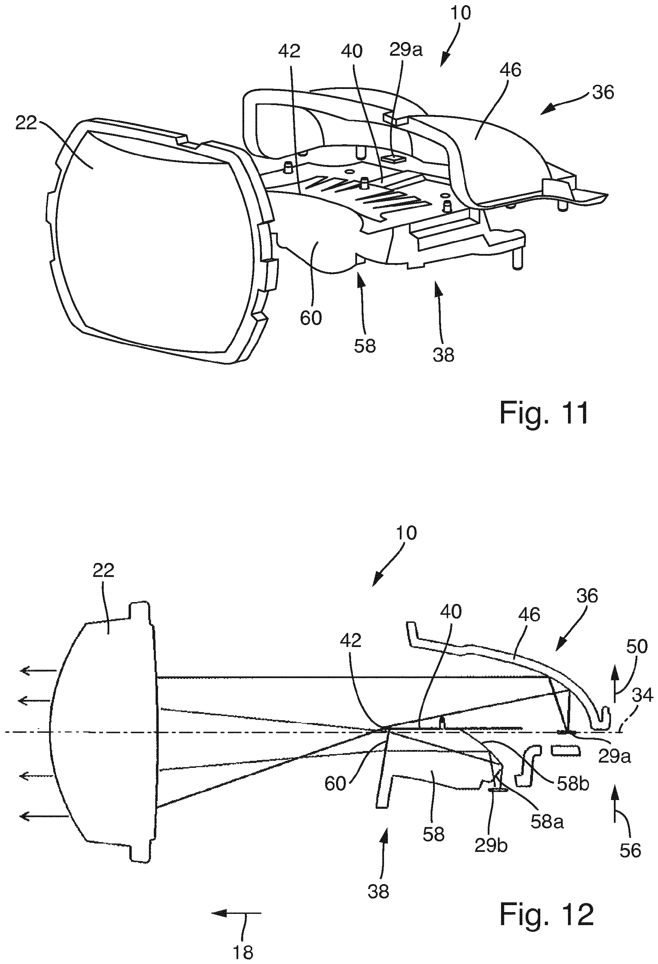

Auch der untere Kühlkörper 26b weist eine Vertiefung 52 auf, in welche die übrigen Bauteile des unteren Untermoduls 38 eingesetzt werden. Die LEDs 29b sind auf einer Platine 54 angeordnet und senden Licht in eine Hauptabstrahlrichtung 56 aus, die in etwa parallel zu der Hauptabstrahlrichtung 50 der oberen LEDs 29a gerichtet ist. Die Primäroptik ist in diesem Fall als ein abgewinkelter Lichtleiter 58 aus einem massiven Kunststoffmaterial ausgebildet, in den über eine den LEDs 29b zugewandte Lichteintrittsfläche 58a (vgl. Figur 12) an der Unterseite das von den LEDs 29b in Richtung 56 emittierte Licht eingekoppelt wird. Der Lichtleiter 58 weist eine schräg stehende Umlenkfläche 58b auf, die als eine totalreflektierende Grenzfläche des Lichtleiters 58 ausgebildet ist. Die eingekoppelten Lichtstrahlen werden an der Umlenkfläche in Richtung einer Lichtaustrittsfläche 60 in Lichtaustrittsrichtung 18 und in Richtung der Projektionslinse 22 umgelenkt.

Das Blendenelement 40 des oberen Untermoduls 36 kann mittels Heißprägen an dem abgewinkelten Lichtleiter 58 des unteren Untermoduls 38 befestigt und zusammen mit diesem in die Vertiefung 52 des unteren Kühlkörpers 26b eingesetzt werden. Dadurch entfällt ein aufwendiges Justieren und Befestigen des Blendenelements in Bezug auf die oberen LEDs 29a. Durch eine hochpräzise Fertigung und Montage des Lichtmoduls 10 ist das Blendenelement 40 bzw. dessen Vorderkante 42 in einer genau definierten Position bezüglich der oberen LEDs 29a angeordnet und im Lichtmodul 10 befestigt. Das ändert jedoch nichts daran, dass in einem montierten Zustand des Lichtmoduls 10 das Blendenelement 40, zumindest aber dessen Vorderkante 42, oberhalb der horizontalen Trennebene 34 angeordnet ist.

An der Unterseite des oberen Kühlkörpers 26a ist eine Auflagefläche 62 und an der Oberseite des unteren Kühlkörpers 26b eine entsprechende Auflagefläche 64 ausgebildet. Die Auflageflächen 62, 64 erstrecken sich über einen Großteil einer entgegen der Lichtaustrittsrichtung 18 gerichteten Rückseite sowie an den Seiten der Kühlkörper 26a, 26b der beiden Untermodule 36, 38. Nach dem Einsetzen der einzelnen Bauteile des Lichtmoduls 10 in die Vertiefungen 44, 52 der Kühlkörper 26a, 26b können die Bauteile an den entsprechenden Kühlkörpern 26a, 26b befestigt werden, bspw. mittels Schrauben 66 (für den Reflektor 46), Schrauben 68 (für die Leiterplatte 48 mit den oberen LEDs 29a) und/oder Schrauben 70 (für die Einheit umfassend den Lichtleiter 58 und das Blendenelement 40). Selbstverständlich können die Bauteile auch auf andere Weise in den Vertiefungen befestigt werden, bspw. mittels einer Rast- oder Clipsverbindung.

Schließlich werden die beiden Kühlkörper 26a, 26b mit einander zugewandten Auflageflächen 62, 64 aufeinander gesetzt und dazwischen die Leiterplatte 48 für die mindestens eine LED 26a des ersten Untermoduls 36 angeordnet. Dann werden die Kühlkörper 26a, 26b aneinander befestigt, bspw. mittels Schrauben 72, so dass die Leiterplatte 48 entlang der horizontalen Trennebene 34 zwischen den Kühlkörpern 26a, 26b eingespannt ist. Auf diese Weise ergibt sich ein besonders guter Wärmeübergang zwischen der eingespannten Leiterplatte 48 und den Kühlkörpern 26a, 26b. Es wäre denkbar, dass die einzelnen Bauteile der Untermodule 36, 38 in den Vertiefungen 44, 52 nicht extra befestigt werden und sich eine Befestigung der Bauteile in den Vertiefungen 44, 52 dadurch automatisch ergibt, dass die beiden Kühlkörper 26a, 26b aneinander befestigt werden. Dadurch können die Bauteile der Untermodule 36, 38 zwischen den Kühlkörpern 26a, 26b bzw. der Auflageflächen 62, 64 eingespannt oder klemmend gehalten werden.

Die Leiterplatte 48 für die Abblendlicht-LEDs 26a ist als IMS (Insulated Metal Substrate) Platine ausgeführt, was es erlaubt, innerhalb der Leiterplatte 48 die Wärme seitlich abzuführen. Die Leiterplatte 48 der Abblendlichtquellen 26a wird zwischen den Auflageflächen 62, 64 der Kühlkörper 26a, 26b angeordnet. Um den Wärmeübergang von der Leiterplatte 48 zu den Kühlkörpern 26a, 26b zu verbessern, können verschiedene Maßnahmen vorgesehen sein:
- Die Auflagefläche 62 des oberen Kühlkörpers 26a auf der Leiterplatte 48 erfolgt direkt auf dem Basismaterial der IMS Platine, d.h. die Leiterplattenschichten wurden in diesem Bereich entfernt, damit die Wärme besser an den oberen Kühlkörper 26a abgeführt werden kann.
- Der untere Kühlkörper 26b wird über seitliche und hintere Auflageflächen 64 thermisch an die IMS Platine 48 angebunden.
- Aus Toleranzgründen liegt die Leiterplatte 48 im gesamten Bereich zwischen den Kühlkörpern 26a, 26b. Die Auflageflächen 62, 64 an den Kühlkörpern 26a, 26b und an der Leiterplatte 48 müssen ausreichend eben sein, damit hier ein guter Wärmeübergang gewährleistet ist. Dann kann auf weitere Stoffe verzichtet werden, die eine Verbesserung des Wärmübergangs herbeiführen, z.B. Wärmeleitpaste.

In direkten Kontakt miteinander kommen die Kühlkörper 26a, 26b beispielsweise im Bereich von Montagehilfen, sofern solche vorgesehen sind. Diese sind in der Regel so gestaltet, dass bei ordnungsgemäßer Montage der Abstand zwischen den Kühlkörpern 26a, 26b nur durch die Leiterplatte 48 bestimmt wird.

Der modulare Aufbau des erfindungsgemäßen Lichtmoduls 10, insbesondere der kompakte und hochintegrierte Aufbau der Kühlkörpereinheit 24 des erfindungsgemäßen Lichtmoduls 10 ermöglicht eine sehr kompakte Bauweise des Lichtmoduls 10 mit einer besonders geringen Baulänge, wobei l* des erfindungsgemäßen Lichtmoduls 10 < l des Lichtmoduls aus dem Stand der Technik ist (vgl. Figuren 3 und 4).

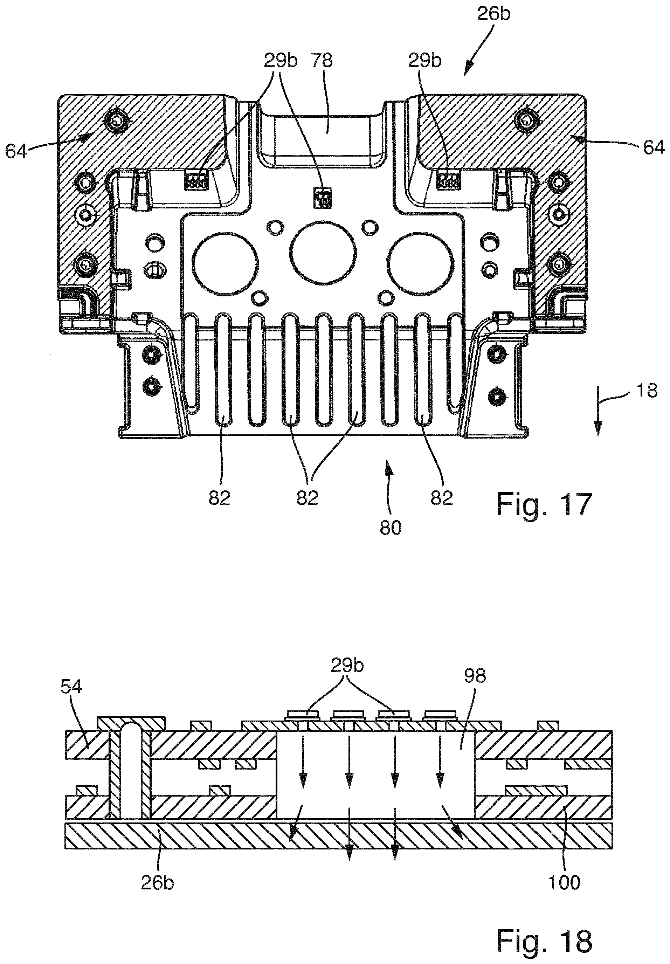

Die Kühlkörper 26a, 26b der beiden Untermodule 36, 38 weisen jeweils an einer entgegen der Lichtaustrittsrichtung 18 gerichteten Rückseite eine Öffnung 78 auf (vgl. Figur 17), über die Steckerelemente 74 von außerhalb der Kühlkörper 26a, 26b zugänglich sind, die auf Leiterplatten 48, 54 mit der mindestens einen darauf befestigten und elektrisch kontaktierten LED 29a, 29b der jeweiligen Untermodule 36, 38 angeordnet und elektrisch kontaktiert sind. Somit werden die oberen LEDs 29a, die auf der Leiterplatte 48 angeordnet sind, durch die in dem Kühlkörper 26a ausgebildete Öffnung (in den Figuren nicht gezeigt) von oben kontaktiert (vgl. Figuren 7 und 8). Die unteren LEDs 29b, die auf der Leiterplatte 54 angeordnet sind, werden durch die in dem Kühlkörper 26b ausgebildete Öffnung 78 von hinten kontaktiert. Die Öffnungen 78 unterbrechen die umlaufende Auflageflächen 62, 64 der Kühlkörper 26a, 26b (vgl. Figur 17).

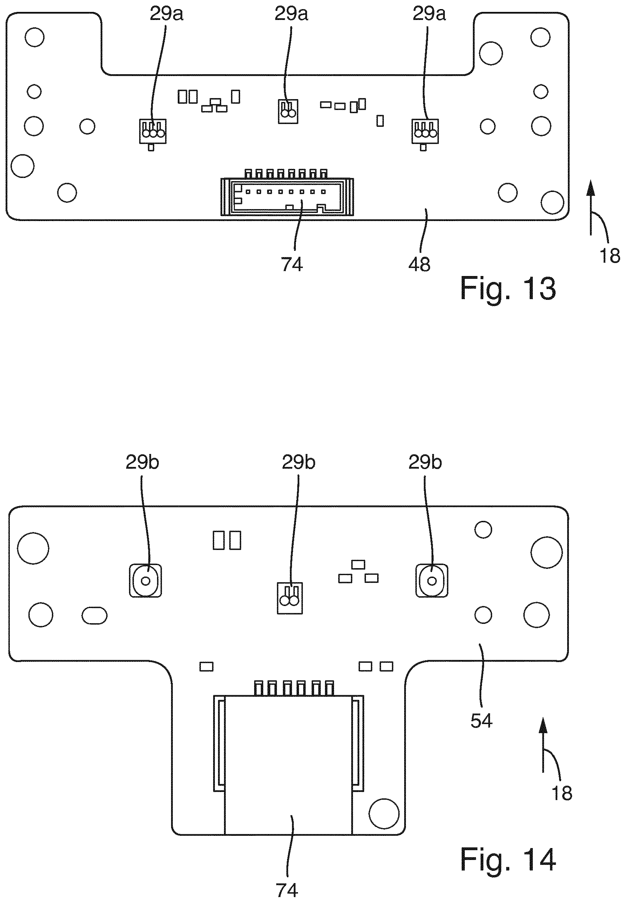

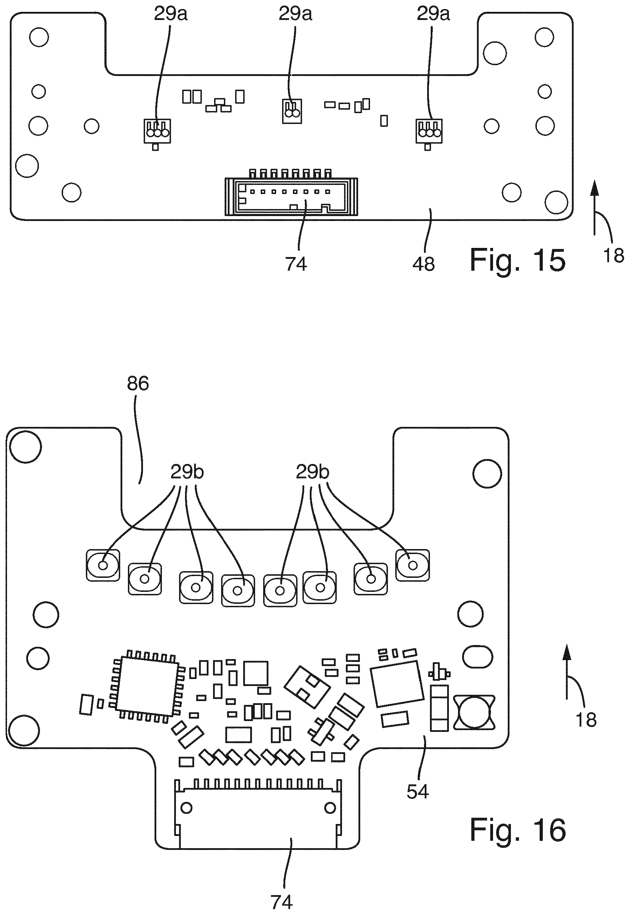

Bei dem anderen Ausführungsbeispiel der Figuren 6 und 8 ist das obere Untermodul 36 zur Erzeugung der Abblendlichtverteilung identisch wie bei dem ersten Ausführungsbeispiel ausgebildet. Dementsprechend sind auch die Leiterplatten 48 mit den LEDs 29a des ersten Untermoduls 36 in den Figuren 13 und 15 auch identisch ausgebildet. Alle Bauteile einschließlich des Kühlkörpers 26a des ersten Untermoduls 36 können somit unverändert übernommen werden. Anders als bei dem ersten Ausführungsbeispiel erzeugt das untere Untermodul 38 kein Matrix-Fernlicht, sondern ein ganz normales Fernlicht, wobei der Fernbereich oberhalb der Helldunkelgrenze durch das von dem zweiten Untermodul 38 ausgesandte Licht ausgeleuchtet wird. Dabei umfasst das Untermodul 38 nun eine Platine 54 (vgl. Figur 14), auf der mindestens eine LED 29b, vorzugsweise mindestens eine Hochleistungs-LED, in dem Beispiel drei LEDs 29b befestigt und elektrisch kontaktiert ist. Die Primäroptik ist in diesem Fall als ein Reflektor 76 ausgebildet, der das von den LEDs 29b emittierte Licht bündelt und in Lichtaustrittsrichtung 18 umlenkt. Die Platine 54 mit den darauf befestigten LEDs 29b ist vorzugsweise entgegen der Lichtaustrittsrichtung 18 leicht nach hinten geneigt, so dass die Hauptabstrahlrichtung 56 der LEDs 29b schräg nach hinten gerichtet ist. Deshalb wird auch ein anderer Kühlkörper 26b als bei dem ersten Ausführungsbeispiel verwendet. Insbesondere hat der hier verwendete Kühlkörper 29b Auflagestellen oder eine Auflagefläche, auf der die Platine 54 schräg nach hinten geneigt aufgesetzt ist. Anders als bei dem ersten Ausführungsbeispiel wird die Blendenelement 40 vor dem Einsetzen in einen der Kühlkörper 26a, 26b nicht an der Primäroptik 76 des unteren Untermoduls 38 befestigt.

Auch bei diesem Ausführungsbeispiel werden die beiden Kühlkörper 26a, 26b mit ihren Auflageflächen 62, 64 aufeinander gesetzt und aneinander befestigt, bspw. mittels Schrauben 72. Es wird vorgeschlagen, dass auch bei diesem Beispiel zumindest die Leiterplatte 48 für die mindestens eine LED 26a des ersten Untermoduls 36 bei montiertem Lichtmodul 10 zwischen den beiden Kühlkörpern 26a, 26b entlang der horizontalen Trennebene 34 eingespannt ist. In dem gezeigten Beispiel wird das Blendenelement 40 mittels einer Rastverbindung in der Vertiefung 52 an dem Kühlkörper 26b befestigt.

Wie oben anhand der beiden Ausführungsbeispiele gezeigt, kann bei dem erfindungsgemäßen Lichtmodul 10 durch einfachen Austausch einzelner Bauteile von einem oder mehreren Untermodulen 36, 38 durch jedes der Lichtmodule eine gewünschte Lichtverteilung erzeugt werden. Ein komplettes Neudesign des gesamten Lichtmoduls 10, wenn eines der Untermodule 36, 38 eine andere Lichtverteilung erzeugen soll, ist somit nicht mehr notwendig. Dementsprechend ist es auch möglich, durch den Austausch einzelner oder mehrerer Bauteile des oberen Untermoduls 36 dieses so zu verändern, dass es eine andere Lichtverteilung (bspw. eine abgeblendete Lichtverteilung mit einer anderen Lichtstärke) als in den Ausführungsbeispielen erzeugt. So wäre es bspw. denkbar, dass andere LEDs 29a mit einer höheren oder geringen Leistung und/oder in einer anderen Anzahl verwendet werden, so dass das Untermodul 36 eine abgeblendete Lichtverteilung mit einer anderen Lichtstärke erzeugt. Unter Umständen setzt die Verwendung anderer LEDs 29a die Verwendung einer anderen Platine 48 voraus, bspw. aus einem anderen Material oder mit anderen Abmessungen, einem anderen Steckerelement 74 etc. Des Weiteren kann es möglich sein, dass die Verwendung anderer LEDs 29a auch die Verwendung eines anderen Kühlkörpers 26a erfordert, bspw. mit einer höheren Wärmeableitfähigkeit, aus einem anderen Material, mit anderen Abmessungen etc. Durch einen Austausch des Blendenelements 40 gegen ein anderes mit einem anderen Verlauf der Vorderkante 42 könnte ferner eine abgeblendete Lichtverteilung mit verändertem Verlauf der Helldunkelgrenze erzielt werden.

Die Kühlkörper 26a, 26b der beiden Untermodule 36, 38 weisen - wie gesagt - jeweils eine Auflagefläche 62, 64 auf, mit der sie bei montiertem Lichtmodul 10 aneinander anliegen und zwischen denen bei montiertem Lichtmodul 10 die Leiterplatte 48 mit der mindestens einen LED 29a des ersten Untermoduls 36 eingespannt ist. Die Auflageflächen 62, 64 erstrecken sich vorzugsweise über einen Großteil einer entgegen einer Lichtaustrittsrichtung 18 des Lichtmoduls 10 gerichteten Rückseite sowie an den Seiten der Kühlkörper 26a, 26b der beiden Untermodule 36, 38 (vgl. Figuren 7 und 8). Die Kühlkörper 26a, 26b sind bei montiertem Lichtmodul 10 aneinander befestigt, insbesondere mittels Schrauben 72.

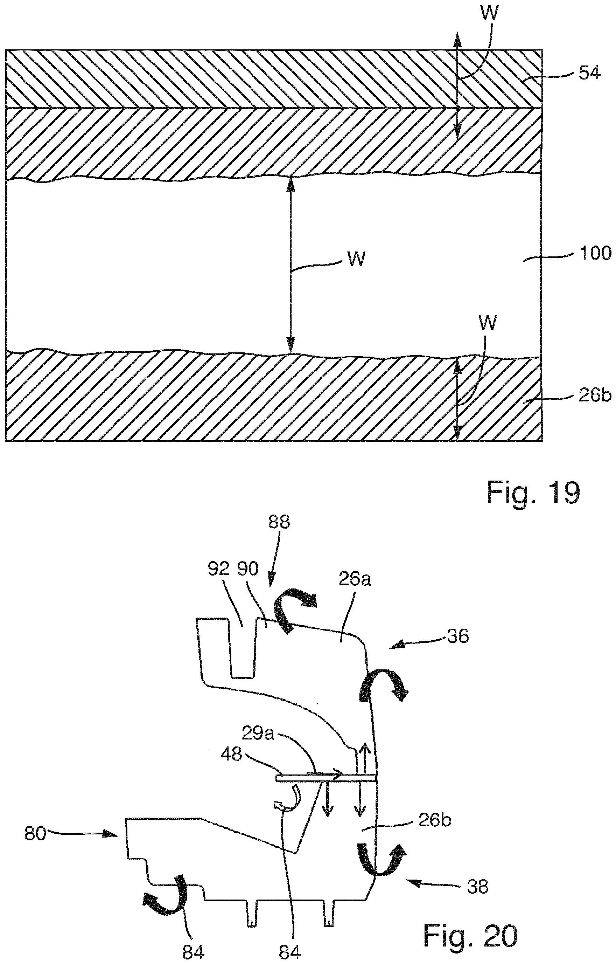

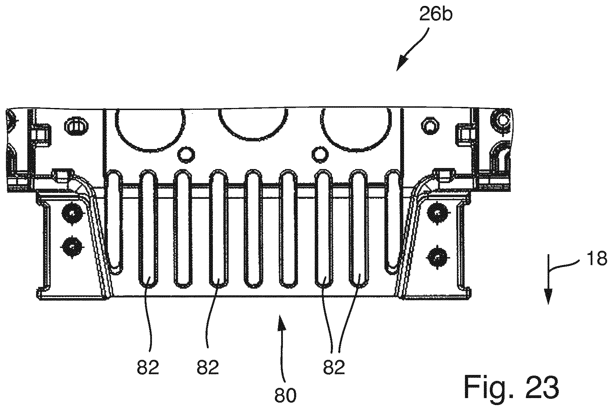

Bei dem erfindungsgemäßen Lichtmodul 10 weist zumindest der Kühlkörper 26b des zweiten Untermoduls 38 auf einem in Lichtaustrittsrichtung 18 des Lichtmoduls 10 gerichteten vorderen Abschnitt 80 mindestens eine Ventilationsöffnung 82 auf (vgl. Figuren 17 und 23), durch die ein von unten nach oben gerichteter Luftstrom 84 (vgl. Figur 20) in einen Bereich des Lichtmoduls 10 zwischen den beiden Vertiefungen 44, 52 der Kühlkörper 26a, 26b der beiden Untermodule 36, 38 gelangen kann. Insbesondere kann der Luftstrom 84 an die zwischen den Kühlkörpern 26a, 26b eingespannte Leiterplatte 48 mit der mindestens einen LED 29a des ersten Untermoduls 26 gelangen. Die Ventilationsöffnungen 82 sorgen dafür, dass es im Inneren des Lichtmoduls 10 im Bereich der Vertiefungen 44, 52 nicht zu einem Hitzestau kommt. Die Leiterplatte 54 mit der mindestens einen LED 29b des zweiten Untermoduls 38 kann im Bereich der Ventilationsöffnungen 82 eine Aussparung 86 aufweisen, um bei montiertem Lichtmodul 10 den Luftstrom 84 nicht zu behindern (vgl. Figur 16).

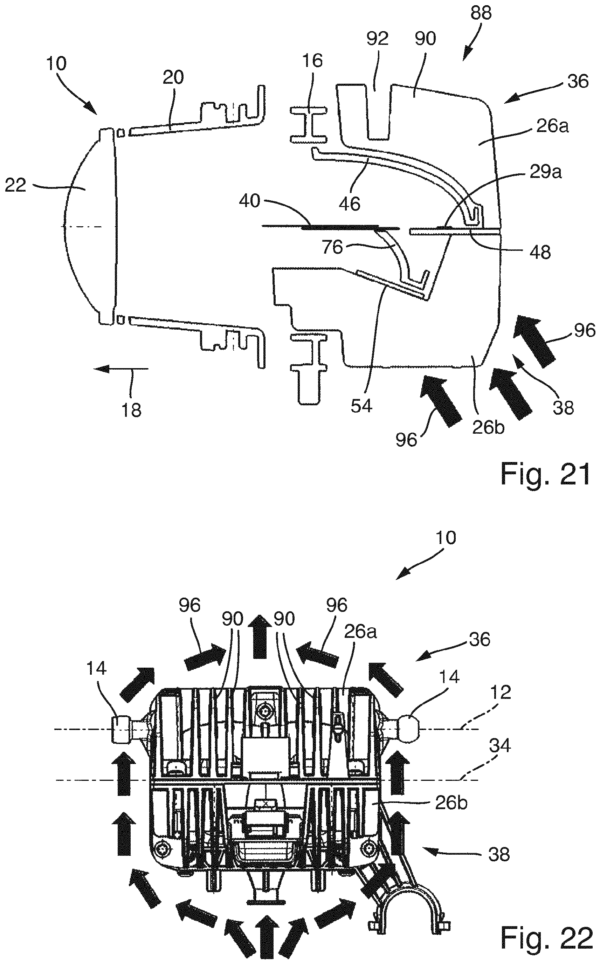

Ferner weist bei dem Lichtmodul 10 zumindest der Kühlkörper 26a des ersten Untermoduls 36 zumindest auf einer bei montiertem Lichtmodul 10 nach oben gerichteten Oberseite 88 Kühlrippen 90 auf, die eine Flächenerstreckung in einer Vertikalebene haben, die parallel zu der Lichtaustrittsrichtung 18 des Lichtmoduls 10 verläuft. In den Kühlrippen 90 ist jeweils ein Schlitz 92 ausgebildet (vgl. Figuren 20 und 21). Die Schlitze 92 der Kühlrippen 90 sind derart zueinander ausgerichtet, dass sich quer zu der Flächenerstreckung der Kühlrippen 90 durch die Schlitze 92 der Kühlrippen 90 hindurch ein Ventilationsspalt 94 ergibt, der eine Längserstreckung parallel zu der horizontalen Drehachse 12 des Lichtmoduls 10 aufweist (vgl. Figuren 5 und 6). Dieser Ventilationsspalt 94 sorgt dafür, dass der durch Konvektion hervorgerufene Luftstrom 96 (vgl. Figur 22) in und um das Lichtmodul 10 bzw. dessen Kühlkörper 26a, 26b herum nicht nur parallel zur Flächenerstreckung der Kühlrippen 90, sondern auch quer dazu verlaufen kann. Dadurch ergibt sich eine effizientere Kühlung des Lichtmoduls 10. Es kommt zu Verwirbelungen im Bereich des Kühlkörpers 26a des ersten Untermoduls 36, die einen besonders guten Wärmeabtransport fördern. Es kommt zu einer Reduzierung der thermischen Grenzschicht zwischen dem Kühlkörper 26a und dem Luftstrom 96.

In dem gezeigten Beispiel ist zumindest die Leiterplatte 48 mit der mindestens einen LED 29a des ersten Untermoduls 36 als eine Al-IMS (Insulated Metal Substrate) Leiterplatte ausgebildet. Es wäre auch denkbar, dass beide Leiterplatten 48, 54 der beiden Untermodule 36, 38 als eine Al-IMS Leiterplatte ausgebildet sind. In dem gezeigten Beispiel umfasst ferner zumindest die Leiterplatte 54 mit der mindestens einen LED 29b des zweiten Untermoduls 38 einen FR4-Verbundwerkstoff mit AlN-Inlays unterhalb der mindestens einen LED 29b. Das AlN-Inlay 98 hat Kontakt zum Kühlkörper 26a. Eine solche Leiterplatte hat besonders gute Wärme leitenden Eigenschaften. Es wäre auch denkbar, dass beide Leiterplatten 48, 54 der beiden Untermodule 36, 38 einen FR4-Verbundwerkstoff mit AlN-Inlays unterhalb der mindestens einen LED 29a, 29b umfassen. Eine solche Leiterplatte 54 aus einem FR4-Verbundwerkstoff mit einem AlN-Inlay 98 unterhalb der LEDs 29b ist beispielhaft in Figur 18 gezeigt. Unterhalb der Leiterplatte 54 des zweiten Untermoduls 38 sorgt ein TIM (Thermal Interface Material) 100 für eine Wärmekopplung zwischen den LEDs 29b und dem Kühlkörper 26b. Das TIM 100 ist bspw. ein Wärmeleitkleber oder eine Wärmeleitpaste. Das TIM 100 bringt bei der Leiterplatte 54 mit ALN-Inlays 98 einen deutlichen Vorteil bei der Wärmeableitung. Durch Befestigen der Leiterplatte 54 zusammen mit dem Reflektor 76 an dem Kühlkörper 26b mittels Schrauben 70 füllt das dickflüssige TIM 100 für ein Ausfüllen von Mikroporen (Vertiefungen mit Durchmessern und Tiefen im Mikrometerbereich) auf der Oberfläche des Kühlkörpers 26b, der üblicherweise als Aluminium-Druckgussteil hergestellt ist. Dadurch kann der Wärmeübergang zwischen der Leiterplatte 54 und dem Kühlkörper 26b weiter verbessert werden. Die Wärmekopplung bzw. der Wärmeübergang zwischen der Leiterplatte 54 und dem Kühlkörper 26b ist in Figur 18 durch Doppelpfeile W angedeutet.

Die vorliegende Erfindung schlägt also eine Vielzahl von Maßnahmen vor, um die thermischen Eigenschaften des besonders kompakten und hochintegrierten (viele Lichtfunktionen auf engstem Raum) Lichtmoduls 10 zu verbessern. Insbesondere kann aufgrund der guten thermischen Eigenschaften auf die Verwendung einer aktiven Kühlung, bspw. mittels eines Lüfters oder Gebläses, verzichtet werden. Die vorgeschlagenen Maßnahmen umfassen insbesondere:
- Einspannen der Leiterplatte 48 des ersten Untermoduls 36 zwischen den Kühlkörpern 26a, 26b des Lichtmoduls 10,
- Ventilationsöffnungen 82 in einem vorderen Abschnitt 80 des Kühlkörpers 26b des zweiten Untermoduls 38,
- Schlitze 92 auf einer Oberseite 88 der Kühlrippen 90 des Kühlkörpers 26a des ersten Untermoduls 36 zur Ausbildung eines Ventilationsspalts 94,

- Al-IMS Leiterplatte 48 des ersten Untermoduls 36,
- Leiterplatte 54 des zweiten Untermoduls 38 aus einem FR4-Verbundwerkstoff mit AlN-Inlays unterhalb der LEDs 29b,
- Halterahmen 16 und/oder Linsenhalter 20 aus einem Arnite^{®}-Material.

Der für einen langfristig zuverlässigen Betrieb der LEDs 29a, 29b erforderliche Wärmeabtransport wird alleine durch Konvektion und sich dadurch in dem Lichtmodul 10 ausbildende Luftströme und Verwirbelungen erzielt. Jede Maßnahme zur Verbesserung der thermischen Eigenschaften des Lichtmoduls 10 kann für sich alleine erfindungswesentlich sein. Eine ganz besonders effiziente Kühlung kann jedoch durch die Kombination von mehreren der vorgeschlagenen Maßnahmen erreicht werden.

Schließlich ist in Figur 24 ein erfindungsgemäßer Kraftfahrzeugscheinwerfer 108 gezeigt, der ein Licht undurchlässiges Gehäuse 102 aufweist, das vorzugsweise aus Kunststoff gefertigt ist. Das Gehäuse 102 hat in Lichtaustrittsrichtung 18 eine Lichtaustrittsöffnung 104, die durch eine transparente Abdeckscheibe 106 aus Glas oder Kunststoff verschlossen ist. Im Inneren des Gehäuses 102 ist ein erfindungsgemäßes Lichtmodul 10 angeordnet, das eine abgeblendete Lichtverteilung (z.B. ein Abblendlicht oder einen Teil davon) sowie eine Fernlichtverteilung erzeugen kann. Zusätzlich zu dem Lichtmodul 10 können in dem Gehäuse 102 auch noch andere Lichtmodule zur Erzeugung anderer Lichtverteilungen (z.B. Nebellicht) oder der gleichen Lichtverteilungen wie das Lichtmodul 10 angeordnet sein. Ferner ist es denkbar, dass in dem Gehäuse 102 auch noch Leuchtenmodule zur Erzeugung einer oder mehrerer Leuchtenfunktion (z.B. Blinklicht, Positionslicht, Tagfahrlicht) angeordnet sind.

## Patentansprüche

1. Lichtmodul (10) eines Scheinwerfers (108) eines Kraftfahrzeugs, das Lichtmodul (10) umfassend ein erstes Untermodul (36) zur Erzeugung einer abgeblendeten Lichtverteilung mit einer horizontalen Helldunkelgrenze, ein zweites Untermodul (38) zur Ausleuchtung eines Fernbereichs oberhalb der Helldunkelgrenze und zur Realisierung einer Fernlichtverteilung, beide Untermodule (36, 38) jeweils umfassend mindestens eine LED (29a; 29b) als Lichtquelle zum Emittieren von Licht und eine Primäroptik (46, 58) zur Bündelung des von den LEDs (29a; 29b) emittierten Lichts ,das Lichtmodul (10) weist zwei separate, jeweils einem der Untermodule (36, 38) zugeordnete Kühlkörper (26a, 26b) auf, die entlang einer horizontalen Trennebene (34) voneinander getrennt sind, wobei zumindest die mindestens eine LED (29a) des ersten Untermoduls (36) auf einer Leiterplatte (48) befestigt und elektrisch kontaktiert ist, die Kühlkörper (26a; 26b) sind in thermischem Kontakt mit den LEDs (29a; 29b) zum Ableiten der während des Betriebs der LEDs (29a; 29b) erzeugten Wärme
**dadurch gekennzeichnet, dass** die Primäroptik (46, 58) von den LEDs (29a; 29b) emittiertes Lichts in Richtung zu einer Projektionslinse (22) umlenkt, die von den beiden Untermodulen (36, 38) ausgesandtes Licht als resultierende Lichtverteilung des Lichtmoduls (10) auf einer Fahrbahn vor dem Kraftfahrzeug abbildet und dass das Lichtmodul (10) ein im Strahlengang des von der Primäroptik des ersten Untermoduls (36) gebündelten und umgelenkten Lichts angeordnetes Blendenelement (40) aufweist, das einen Teil des von der Primäroptik des ersten Untermoduls (36) gebündelten und umgelenkten Lichts abschattet und das eine Kante aufweist, die von der Projektionslinse als Helldunkelgrenze auf einer Fahrbahn vor dem Kraftfahrzeug abgebildet wird, und dass zumindest die Leiterplatte (48) für die mindestens eine LED (26a) des ersten Untermoduls (36) bei montiertem Lichtmodul (10) zwischen den beiden Kühlkörpern (26a, 26b) entlang der horizontalen Trennebene (34) eingespannt ist.

2. Lichtmodul (10) nach Anspruch 1, **dadurch gekennzeichnet, dass** die mindestens eine LED (29b) des zweiten Untermoduls (38) auf einer Leiterplatte (54) befestigt und elektrisch kontaktiert ist.

3. Lichtmodul (10) nach Anspruch 2, **dadurch gekennzeichnet, dass** die Leiterplatte (54) mit der mindestens einen LED (29b) des zweiten Untermoduls (38) in einer Vertiefung (52) eingesetzt ist, die in dem Kühlkörper (26b) des zweiten Untermoduls (38) ausgebildet ist.

4. Lichtmodul (10) nach Anspruch 3, **dadurch gekennzeichnet, dass** in die Vertiefung (52) des Kühlkörpers (26b) des zweiten Untermoduls (38) nacheinander eine Leiterplatte (54) mit der mindestens einen darauf befestigten und elektrisch kontaktierten LED (29b) und dann die Primäroptik (58; 76) eingesetzt sind.

5. Lichtmodul (10) nach einem der Ansprüche 3 oder 4,
**dadurch gekennzeichnet, dass** das Blendenelement (40) ein plattenartiges Blendenelement (40) ist, welches verspiegelt ist, die Kante des plattenartigen Blendenelements (40) eine Vorderkante (42) ist und sich das plattenartige Blendenelement bei montiertem
Lichtmodul (10) in einer horizontalen Ebene erstreckt ,und dass das plattenartige Blendenelement (40) als letztes Bauteil in die Vertiefung (52) des Kühlkörpers (26b) des zweiten Untermoduls (38) eingesetzt ist, wobei die Vorderkante (42) des Blendenelements (40) bei montiertem Lichtmodul (10) in bzw. oberhalb der horizontalen Trennebene (34) des Lichtmoduls (10) angeordnet ist.

6. Lichtmodul (10) nach einem der Ansprüche 1 bis 5, **dadurch gekennzeichnet, dass** die Primäroptik des zweiten Untermoduls (38) als ein massiver transparenter Kunststoffkörper (58) ausgebildet ist, der eine der mindestens einen LED (29b) des zweiten Untermoduls (38) zugewandte Lichteintrittsfläche, über die von der mindestens einen LED (29b) ausgesandtes Licht eintritt, totalreflektierende Grenzflächen zum Umlenken des eingetretenen Lichts und eine bei montiertem Lichtmodul (10) der Projektionslinse (22) zugewandte Lichtaustrittsfläche (60) aufweist, über die das umgelenkte Licht aus dem Kunststoffkörper (58) austritt.

7. Lichtmodul (10) nach Anspruch 5 und 6, **dadurch gekennzeichnet, dass** das Blendenelement (40) vor dem Einsetzen des Kunststoffkörpers (58) in die Vertiefung (52) des Kühlkörpers (26b) des zweiten Untermoduls (38) an dem Kunststoffkörper (58) mittels Heißprägen befestigt ist und anschließend zusammen mit diesem in die Vertiefung (52) des Kühlkörpers (26b) des zweiten Untermoduls (38) eingesetzt ist.

8. Lichtmodul (10) nach einem der Ansprüche 2 bis 7, **dadurch gekennzeichnet, dass** die Kühlkörper (26a, 26b) der beiden Untermodule (36, 38) jeweils eine Auflagefläche (62, 64) aufweisen, mit der sie bei montiertem Lichtmodul (10) aneinander anliegen und zwischen denen bei montiertem Lichtmodul (10) die Leiterplatte (48) mit der mindestens einen LED (29a) des ersten Untermoduls (36) eingespannt ist, wobei sich die Auflageflächen (62, 64) über einen Großteil einer entgegen einer Lichtaustrittsrichtung (18) des Lichtmoduls (10) gerichteten Rückseite sowie an den Seiten der Kühlkörper (26a, 26b) der beiden Untermodule (36, 38) erstrecken.

9. Lichtmodul (10) nach einem der Ansprüche 1 bis 8, **dadurch gekennzeichnet, dass** zumindest der Kühlkörper (26b) des zweiten Untermoduls (38) auf einem in Lichtaustrittsrichtung (18) des Lichtmoduls (10) gerichteten vorderen Abschnitt (80) mindestens eine Ventilationsöffnung (82) aufweist, durch die ein von unten nach oben gerichteter Luftstrom an die zwischen den Kühlkörpern (26a, 26b) eingespannte Leiterplatte (48) mit der mindestens einen LED (29a) des ersten Untermoduls (26) gelangen kann.

10. Lichtmodul (10) nach einem der Ansprüche 1 bis 9, **dadurch gekennzeichnet, dass** zumindest der Kühlkörper (26a) des ersten Untermoduls (36) zumindest auf einer bei montiertem Lichtmodul (10) nach oben gerichteten Oberseite (88) Kühlrippen (90) aufweist, die eine Flächenerstreckung in einer Vertikalebene haben, die parallel zu einer Lichtaustrittsrichtung (18) des Lichtmoduls (10) verläuft, wobei in den Kühlrippen (90) jeweils ein Schlitz (92) ausgebildet ist und die Schlitze (92) der Kühlrippen (90) derart zueinander ausgerichtet sind, dass sich quer zu der Flächenerstreckung der Kühlrippen (90) durch die Schlitze (92) der Kühlrippen (90) hindurch ein Ventilationsspalt (94) ergibt.

11. Lichtmodul (10) nach einem der Ansprüche 1 bis 10, **dadurch gekennzeichnet, dass** zumindest die Leiterplatte (48) mit der mindestens einen LED (29a) des ersten Untermoduls (36) als eine Al-IMS Leiterplatte ausgebildet ist.

12. Lichtmodul (10) nach einem der Ansprüche 2 bis 11, **dadurch gekennzeichnet, dass** zumindest die Leiterplatte (54) mit der mindestens einen LED (29b) des zweiten Untermoduls (38) einen FR4-Verbundwerkstoff mit AlN-Inlays (98) unterhalb der mindestens einen LED (29b) umfasst.

13. Lichtmodul (10) nach einem der Ansprüche 1 bis 12, **dadurch gekennzeichnet, dass** die beiden Untermodule (36, 38) mit einer in Lichtaustrittsrichtung (18) gerichteten Vorderseite der Kühlkörper (26a, 26b) an einem Halterahmen (16) befestigt sind, über den das Lichtmodul (10) in einem Gehäuse (102) des Scheinwerfers (108) befestigt ist.

14. Lichtmodul (10) nach Anspruch 13, **dadurch gekennzeichnet, dass** der Halterahmen (16) seitlich Lagerstellen (14) aufweist, über welche das Lichtmodul (10) um eine horizontale Drehachse (12) verschwenkbar in dem Gehäuse (102) des Scheinwerfers (108) gelagert ist.

15. Kraftfahrzeugscheinwerfer (108) umfassend ein Gehäuse (102) mit einer in Lichtaustrittsrichtung (18) ausgebildeten Lichtaustrittsöffnung (104), welche durch eine transparente Abdeckscheibe (106) verschlossen ist, **dadurch gekennzeichnet, dass** im Inneren des Gehäuses (102) mindestens ein Lichtmodul (10) nach einem der Ansprüche 1 bis 14 angeordnet ist.

## Claims

1. Light module (10) of a vehicle headlight (108), comprising a first sub-module (36) for creating screened light distribution with a horizontal light-dark boundary, and a second sub-module (38) for illuminating a distant area above the light-dark boundary and for achieving full beam distribution, both sub-modules (36, 38) each comprising at least one LED (29a; 29b) as a light source for emitting light and one primary optics (46, 58) for consolidating the light emitted by the LEDs (29a; 29b); the light module (10) comprises one separate cooling element (26a; 26b) for each sub-module (36, 38), separated from one another along a horizontal partition level (34), whereby at least the one LED (29a) of the first sub-module (36) is fastened onto a circuit board (48) and electrically contacted; the cooling elements (26a; 26b) are in thermal contact with the LEDs (29a; 29b) for diverting the heat generated during operation of the LEDs (29a; 29b), **characterised in that** the primary optics (46, 58) redirect light emitted by the LEDs (29a; 29b) toward a projection lens (22), shape the light emitted by the two sub-modules (36, 38) as a resulting light distribution of the light module (10) on the lane in front of the vehicle, and that the light module (10) comprises an aperture element (40) in the beam path of the light consolidated and redirected by the primary optics of the first sub-module (36) that shadows a portion of the light consolidated and redirected by the primary optics of the first sub-module (36), and comprising an edge in the form of a light-dark boundary cast by the projection lens on a lane in front of the vehicle, and that at least the circuit board (48) for the at least one LED (26a) of the first sub-module (36) is clamped between the two cooling elements (26a; 26b) along the horizontal partition level (34) when the light module (10) is installed.

2. Light module (10) as per claim 1, **characterised in that** at least the one LED (29b) of the second sub-module (38) is fastened to a circuit board (54) and electrically contacted.

3. Light module (10) as per claim 2, **characterised in that** the circuit board (54) with at least the one LED (29b) of the second sub-module (38) is installed in a depression (52) in the cooling element (26b) of the second sub-module (38).

4. Light module (10) as per claim 3, **characterised in that** a circuit board (54) with the at least one fastened and electrically contacted LED (29b) and primary optics (58; 76) are successively installed in the depression (52) of the cooling element (26b) of the second sub-module (38).

5. Light module (10) as per claim 3 or 4, **characterised in that** the aperture element (40) is a plate-shaped aperture element (40) with a reflective surface, the edge of the plate-shaped aperture element (40) is a front edge (42), and when the light module (10) is installed the plate-shaped aperture element (40) extends along a horizontal plane, and that the plate-shaped aperture element (40) is the last component installed in the depression (52) of the cooling element (26b) of the second sub-module (38), whereby the front edge (42) of the aperture element (40) is located in or above the horizontal partition level (34) of the light module (10) when the light module (10) is installed.

6. Light module (10) as per one of the claims 1 through 5, **characterised in that** the primary optics of the second sub-module (38) is a massive, transparent plastic element (58), comprising a light intake surface facing the at least one LED (29b) of the second sub-module (38) via which light emitted from the at least one LED (29b) enters, and fully reflective surfaces for redirecting the entering light, and a light outlet surface facing the projection lens (22) when the light module (10) is installed, via which the redirected light exits from the plastic element (58).

7. Light module (10) as per claims 5 and 6, **characterised in that** the aperture element (40) is fastened to the plastic element (58) via hot stamping before insertion of the plastic element (58) into the depression (52) of the cooling element (26b) of the second sub-module (58), and is then inserted with it into the depression (52) of the cooling element (26b) of the second sub-module (38).

8. Light module (10) as per one of the claims 2 through 7, **characterised in that** the cooling elements (26a, 26b) of the two sub-modules (36, 38) each comprise a shelf surface (62, 64) with which they touch one another when the light module (10) is installed and between which, when the light module (10) is installed, the circuit board (48) with the at least one LED (29a) of the first sub-module (36) is clamped, whereby the shelf surfaces (62, 64) extend across most of a backside facing a light outlet direction (18) of the light module (10) and on the sides of the cooling elements (26a, 26b) of both sub-modules (36, 38).

9. Light module (10) as per one of the claims 1 through 8, **characterised in that** at least the cooling element (26b) of the second sub-module (38) comprises at least one ventilation opening (82) on a front section (80) facing a light outlet direction (18) of the light module (10), via which an upward air flow can reach the circuit board (48) clamped between the two cooling elements (26a, 26b) with the at least one LED (29a) of the first sub-module (26).

10. Light module (10) as per one of the claims 1 through 9, **characterised in that** at least the cooling element (26a) of the first sub-module (36) comprises cooling ribs (90) at least on an upward facing upper side (88) when the light module (10) is installed, that extend across a vertical plane parallel to a light outlet direction (18) of the light module (10), whereby the cooling ribs (90) each contain a slit (92) and the slits (92) of the cooling ribs (90) face each other such that there is a ventilation gab (94) through the slits (92) in the cooling ribs (90) across the surface direction of the cooling ribs (90).

11. Light module (10) as per one of the claims 1 through 10, **characterised in that** at least the circuit board (48) with the at least one LED (29a) of the first sub-module (36) is an Al-IMS circuit board.

12. Light module (10) as per one of the claims 2 through 11, **characterised in that** at least the circuit board (54) with the at least one LED (29b) of the second sub-module (38) comprises an FR4 composite material with AlN inlays (98) below the at least one LED (29b).

13. Light module (10) as per one of the claims 1 through 12, **characterised in that** the two sub-modules (36, 38) are attached to a bracket (16) with a front side of the cooling elements (26a, 26b) aligned with the light outlet direction (18), via which the light module (10) is fastened in a housing (102) of the headlight (108).

14. Light module (10) as per claim 13, **characterised in that** the bracket (16) comprises recesses (14) on the sides, via which the light module (10) is attached around a horizontal rotating axis (12) in the housing (102) of the headlight (108) such that it can swivel.

15. Vehicle headlight (108) comprising a housing (102) with a light outlet opening (104) in the light outlet direction (18), sealed with a transparent cover panel (106), **characterised in that** at least one light module (10) as per claims 1 through 14 is installed within the housing (102).

## Revendications

1. Module d'éclairage (10) d'un phare (108) de véhicule automobile, le module d'éclairage (10) comprenant un premier sous-module (36) permettant de générer une répartition lumineuse phare baissé avec une limite clair-obscur horizontale, un second sous-module (38) permettant d'éclairer une région distante au-dessus de la limite clair-obscur et permettant de mettre en œuvre une répartition pour feu de route, les deux sous-modules (36, 38) comprenant respectivement au moins une DEL (29a ; 29b) faisant office de source lumineuse afin d'émettre de la lumière
et une optique primaire (46, 58) permettant de focaliser la lumière émise par les DEL (29a ; 29b), le module d'éclairage (10) présente deux dissipateurs thermiques (26a, 26b) distincts, associés respectivement à l'un des sous-modules (36, 38) et séparés l'un de l'autre le long d'un plan de séparation horizontal (34), dans lequel au moins la au moins une DEL (29a) du premier sous-module (36) est fixée sur un circuit imprimé (48) et est en contact électrique avec celui-ci, les dissipateurs thermiques (26a ; 26b) sont en contact thermique avec les DEL (29a ; 29b) afin de dissiper la chaleur générée pendant le fonctionnement des DEL (29a ; 29b)
**caractérisé en ce que**
l'optique primaire (46, 58) dévie la lumière émise par les DEL (29a ; 29b) en direction d'une lentille de projection (22) qui reporte la lumière émise par les deux sous-modules (36, 38) sous forme de répartition lumineuse résultante du module d'éclairage (10) sur une chaussée devant le véhicule automobile, et **en ce que** le module d'éclairage (10) présente un élément formant diaphragme (40) qui est agencé sur le trajet de faisceau de la lumière focalisée et déviée par l'optique primaire du premier sous-module (36) et qui occulte une partie de la lumière focalisée et déviée par l'optique primaire du premier sous-module (36) et qui présente un bord qui est reporté par la lentille de projection sous forme de limite clair-obscur sur une chaussée devant le véhicule automobile, et **en ce que**
au moins le circuit imprimé (48) destiné à la au moins une DEL (29a) du premier sous-module (36) est enserré entre les deux dissipateurs thermiques (26a, 26b) le long du plan de séparation horizontal (34) lorsque le module d'éclairage (10) est monté.

2. Module d'éclairage (10) selon la revendication 1, **caractérisé en ce que** la au moins une DEL (29b) du second module d'éclairage (38) est fixée sur un circuit imprimé (54) et est en contact électrique avec celui-ci.

3. Module d'éclairage (10) selon la revendication 2, **caractérisé en ce que** le circuit imprimé (54) comprenant la au moins une DEL (29b) du second sous-module (38) est inséré dans un renfoncement (52) formé dans le dissipateur thermique (26b) du second sous-module (38).

4. Module d'éclairage (10) selon la revendication 3, **caractérisé en ce qu'**un circuit imprimé (54) comprenant la au moins une DEL (29b) fixée sur celui-ci et en contact électrique avec celui-ci, puis l'optique primaire (58 ; 76), sont insérés l'un après l'autre dans le renfoncement (52) du dissipateur thermique (26b) du second sous-module (38).

5. Module d'éclairage (10) selon la revendication 3 ou 4, **caractérisé en ce que** l'élément formant diaphragme (40) est un élément formant diaphragme (40) de type plaque qui est argenté, le bord de l'élément formant diaphragme (40) de type plaque est un bord avant (42), et l'élément formant diaphragme de type plaque s'étend dans un plan horizontal (15) lorsque le module d'éclairage (10) est monté, et **en ce que** l'élément formant diaphragme (40) de type plaque est inséré en tant que dernier composant dans le renfoncement (52) du dissipateur thermique (26b) du second sous-module (38), dans lequel le bord avant (42) de l'élément formant diaphragme (40) est agencé dans ou au-dessus du plan de séparation horizontal (34) du module d'éclairage (10) lorsque le module d'éclairage (10) est monté.

6. Module d'éclairage (10) selon l'une quelconque des revendications 1 à 5, **caractérisé en ce que** l'optique primaire du second sous-module (38) est réalisée sous la forme d'un corps en matière plastique (58) transparent solide, qui présente une surface d'entrée de lumière tournée vers la au moins une DEL (29b) du second sous-module (38) et par laquelle la lumière émise par la au moins une DEL (29b) entre, des surfaces de délimitation à réflexion totale permettant de dévier la lumière entrée, et une surface de sortie de lumière (60) tournée vers la lentille de projection (22) lorsque le module d'éclairage (10) est monté et par laquelle la lumière déviée sort du corps en matière plastique (58).

7. Module d'éclairage (10) selon les revendications 5 et 6, **caractérisé en ce que**, avant l'insertion du corps en matière plastique (58) dans le renfoncement (52) du dissipateur thermique (26b) du second sous-module (38), l'élément formant diaphragme (40) est fixé au corps en matière plastique (58) par estampage à chaud et est ensuite inséré avec celui-ci dans le renfoncement (52) du dissipateur thermique (26b) du second sous-module (38).

8. Module d'éclairage (10) selon l'une quelconque des revendications 2 à 7, **caractérisé en ce que** les dissipateurs thermique (26a, 26b) des deux sous-modules (36, 38) présentent respectivement une surface d'appui (62, 64) avec laquelle ils s'appuient l'un contre l'autre lorsque le module d'éclairage (10) est monté et entre lesquelles est enserré le circuit imprimé (48) comprenant la au moins une DEL (29a) du premier sous-module (36) lorsque le module d'éclairage (10) est monté, dans lequel les surfaces d'appui (62, 64) s'étendent sur une grande partie d'un côté arrière, dirigé à l'opposé d'une direction de sortie de lumière (18) du module d'éclairage (10), et sur les côtés des dissipateurs thermiques (26a, 26b) des deux sous-modules (36, 38).

9. Module d'éclairage (10) selon l'une quelconque des revendications 1 à 8, **caractérisé en ce qu'**au moins le dissipateur thermique (26b) du second sous-module (38) présente, sur une section avant (80) dirigée dans la direction de sortie de lumière (18) du module d'éclairage (10), au moins un orifice de ventilation (82) à travers lequel un flux d'air dirigé du bas vers le haut peut parvenir jusqu'au circuit imprimé (48), comprenant la au moins une DEL (29a) du premier sous-module (26), enserré entre les dissipateurs thermiques (26a, 26b).

10. Module d'éclairage (10) selon l'une quelconque des revendications 1 à 9, **caractérisé en ce qu'**au moins le dissipateur thermique (26a) du premier sous-module (36) présente, au moins sur une face supérieure (88) dirigée vers le haut lorsque le module d'éclairage (10) est monté, des nervures de refroidissement (90) dont une extension de surface se fait dans un plan vertical s'étendant parallèlement à une direction de sortie de lumière (18) du module d'éclairage (10), dans lequel une fente (92) est respectivement formée dans les nervures de refroidissement (90) et les fentes (92) des nervures de refroidissement (90) sont orientées les unes par rapport aux autres de telle manière qu'une fente d'aération (94) est formée à travers les fentes (92) des nervures de refroidissement (90) transversalement par rapport à l'extension de surface des nervures de refroidissement (90).

11. Module d'éclairage (10) selon l'une quelconque des revendications 1 à 10, **caractérisé en ce qu'**au moins le circuit imprimé (48) avec la au moins une DEL (29a) du premier sous-module (36) est réalisé sous la forme d'un circuit imprimé à substrat métallique isolé aluminium (Al-IMS).

12. Module d'éclairage (10) selon l'une quelconque des revendications 2 à 11, **caractérisé en ce qu'**au moins le circuit imprimé (54) comprenant la au moins une DEL (29b) du second sous-module (38) comprend un matériau composite FR4 avec des inserts au nitrure d'aluminium (AlN) (98) au-dessous de la au moins une DEL (29b).

13. Module d'éclairage (10) selon l'une quelconque des revendications 1 à 12, **caractérisé en ce que** les deux sous-modules (36, 38) sont fixés, avec une face avant des dissipateurs thermiques (26a, 26b) dirigée dans la direction de sortie de lumière (18), à un cadre de retenue (16) par l'intermédiaire duquel le module d'éclairage (10) est fixé dans un boîtier (102) du phare (108).

14. Module d'éclairage (10) selon la revendication 13, **caractérisé en ce que** le cadre de retenue (16) présente latéralement des points de montage (14) par l'intermédiaire desquels le module d'éclairage (10) est monté dans le boîtier (102) du phare (108) de manière à pouvoir pivoter autour d'un axe de rotation horizontal (12).

15. Phare de véhicule automobile (108) comprenant un boîtier (102) avec un orifice de sortie de lumière (104) formé dans la direction de sortie de lumière (18) et fermé par une plaque de recouvrement transparente (106), **caractérisé en ce qu'**au moins un module d'éclairage (10) selon l'une quelconque des revendications 1 à 14 est agencé à l'intérieur du boîtier (102).
